# EUROPEAN PATENT APPLICATION

(11) **EP 4 794 238 A1**
(43) Date of publication of application: **19.08.2026**
(21) Application number: 24881487.3
(22) Date of filing: 16.10.2024
(51) Int. Cl.: H04L 5/00

(54) **COMMUNICATION METHOD AND COMMUNICATION APPARATUS**

(30) Priority: 27.10.2023 CN 202311425008
(71) Applicant: HUAWEI TECHNOLOGIES CO., LTD., Shenzhen 518129 (CN)
(72) Inventor: XUE, Yifan, Shenzhen, Guangdong 518129 (CN); XUE, Lixia, Shenzhen, Guangdong 518129 (CN)
(74) Representative: Gill Jennings & Every LLP
(86) International application number: PCT/CN2024/125189
(87) International publication number: WO 2025/087121

(57) **Abstract**

This application provides a communication method and a communication apparatus. The method may include: A transmit end device sends a reference signal, where the reference signal is generated based on a first sequence, the reference signal includes X OOK symbols, the X OOK symbols include X1 first symbols and X2 second symbols, the first symbol indicates a first bit value, the second symbol indicates a second bit value, the first sequence corresponds to the X1 first symbols, X is an integer greater than 1, X1 and X2 are integers greater than or equal to 0, and X1+X2=X. In this way, the reference signal can be generated by using a long sequence (namely, the first sequence). Because the long sequence has good autocorrelation performance, detection performance on the reference signal can be improved.

## Description

This application claims priority to Chinese Patent Application No. 202311425008.8, filed with the China National Intellectual Property Administration on October 27, 2023 and entitled "COMMUNICATION METHOD AND COMMUNICATION APPARATUS", which is incorporated herein by reference in its entirety.

### TECHNICAL FIELD

This application relates to the field of wireless communication, and more specifically, to a communication method and a communication apparatus.

### BACKGROUND

A terminal device may receive a wake up signal by using a separate low-power small circuit, for example, wake up radio (wake up radio, WUR), and a main receiver may be in a sleep state. After the terminal device detects the wake up signal by using the WUR, the terminal device triggers wake up of the main receiver. After the main receiver is woken up, the terminal device may receive data or the like by using the main receiver. After the WUR is introduced, how to perform transmission of a reference signal to improve detection performance on the reference signal is a problem worth considering.

### SUMMARY

This application provides a communication method and a communication apparatus, to improve detection performance on a reference signal.

According to a first aspect, a communication method is provided. The method may be performed by a communication apparatus. The communication apparatus may be a device (for example, referred to as a transmit end device such as a network device), or may be a component (for example, a chip, a chip system, or a circuit) of the device. This is not limited in this application.

The method may include: sending a reference signal, where the reference signal is generated based on a first sequence, the reference signal includes X on-off keying OOK symbols, the X OOK symbols include X1 first symbols and X2 second symbols, the first symbol indicates a first bit value, the second symbol indicates a second bit value, the first sequence corresponds to the X1 first symbols, X is an integer greater than 1, X1 and X2 are integers greater than or equal to 0, and X1+X2=X.

Optionally, the method further includes: determining the reference signal. For example, sending time of the reference signal is determined.

Optionally, the method further includes: determining the first sequence. For example, the first sequence is obtained. For another example, the first sequence is generated.

According to a second aspect, a communication method is provided. The method may be performed by a communication apparatus. The communication apparatus may be a device (for example, referred to as a receive end device such as a terminal device), or may be a component (for example, a chip, a chip system, or a circuit) of the device. This is not limited in this application.

The method may include: receiving a reference signal, where the reference signal is generated based on a first sequence, the reference signal includes X on-off keying OOK symbols, the X OOK symbols include X1 first symbols and X2 second symbols, the first symbol indicates a first bit value, the second symbol indicates a second bit value, the first sequence corresponds to the X1 first symbols, X is an integer greater than 1, X1 and X2 are integers greater than or equal to 0, and X1+X2=X.

Optionally, the method further includes: determining the reference signal. For example, sending time of the reference signal is determined.

Optionally, the method further includes: determining the first sequence. For example, the first sequence is obtained. For another example, the first sequence is generated.

Based on the technical solution, the reference signal is generated based on the first sequence, and the first sequence corresponds to the X1 OOK symbols in the reference signal. In this way, the reference signal can be generated by using a long sequence (namely, the first sequence). Because the long sequence has good autocorrelation performance, detection performance on the reference signal can be improved.

With reference to the second aspect, in some implementations of the second aspect, the method further includes: performing correlation processing on the reference signal based on the first sequence.

With reference to the second aspect, in some implementations of the second aspect, the performing correlation processing on the reference signal based on the first sequence includes: obtaining a to-be-processed signal based on a pattern corresponding to the X OOK symbols; and performing correlation processing on the to-be-processed signal based on the first sequence.

With reference to the first aspect or the second aspect, in some implementations, the first sequence includes X1 subsequences, and each of the X1 subsequences corresponds to one first symbol.

Based on the technical solution, the first sequence may be divided into the X1 subsequences. In other words, the first sequence may be considered as a combination of the X1 subsequences. In this way, each subsequence may correspond to one first symbol, and the X1 subsequences correspond to the X1 first symbols.

With reference to the first aspect or the second aspect, in some implementations, the reference signal is generated based on the first sequence and the pattern corresponding to the X OOK symbols.

Based on the technical solution, the first sequence may be mapped to different OOK symbols based on the pattern (pattern) corresponding to the X OOK symbols. Specifically, positions of the X1 first symbols may be identified based on the pattern corresponding to the X OOK symbols, so that the first sequence may be mapped to the X1 first symbols.

With reference to the first aspect or the second aspect, in some implementations, the pattern corresponding to the X OOK symbols represents positions and/or an order of the X1 first symbols and the X2 second symbols.

With reference to the first aspect or the second aspect, in some implementations, a length of the first sequence is N*X1, and N indicates a quantity of frequency domain units occupied by the reference signal.

With reference to the first aspect or the second aspect, in some implementations, the first sequence is obtained by concatenating L second sequences, L is not equal to X1, and L is an integer greater than 1.

Based on the technical solution, considering that if the reference signal has a long length and includes a large quantity of OOK symbols (for example, hundreds of OOK symbols or even thousands of OOK symbols), a length of a sequence used to generate the reference signal is also very long. As a result, complexity of generating the reference signal based on the sequence with a long length is high. In addition, if the sequence used to generate the reference signal is pre-stored, a longer sequence length may also have a higher requirement on storage space. Therefore, a second sequence whose length is shorter than that of the first sequence may be generated, or the second sequence is pre-stored, and then the second sequence is processed, for example, a plurality of second sequences are concatenated, to obtain a first sequence with a long length.

With reference to the first aspect or the second aspect, in some implementations, the first sequence is part or all of a second sequence.

Based on the technical solution, considering that first sequences of a plurality of lengths may need to be generated and/or pre-stored for reference signals of different lengths, a requirement on storage space is high. Therefore, a second sequence with a long length may be generated and/or pre-stored. When a reference signal needs to be sent, the second sequence with a long length may be processed (for example, truncated) based on a length of the reference signal, to obtain a first sequence with a short length.

With reference to the first aspect or the second aspect, in some implementations, a start position of the first sequence is a start position of the second sequence; or a start position of the first sequence is determined based on a time domain resource occupied by the reference signal.

With reference to the first aspect or the second aspect, in some implementations, the reference signal occupies P orthogonal frequency division multiplexing OFDM symbols, the first sequence includes P groups of subsequences, the P groups of subsequences correspond to the P OFDM symbols, each group of subsequences corresponds to one OFDM symbol, a quantity of subsequences included in each of the P groups of subsequences is greater than or equal to 0, and P is an integer greater than or equal to 1.

With reference to the first aspect or the second aspect, in some implementations, the P groups of subsequences include an i^{th} group of subsequences, the i^{th} group of subsequences corresponds to an i^{th} OFDM symbol in the P OFDM symbols, a frequency domain signal of the reference signal in the i^{th} OFDM symbol is determined based on positions of a first symbol and a second symbol that are included in the i^{th} OFDM symbol, and i is an integer greater than or equal to 1 and less than or equal to P.

With reference to the first aspect or the second aspect, in some implementations, the reference signal is periodically sent.

With reference to the first aspect or the second aspect, in some implementations, the reference signal is a low-power synchronization signal LP-SS.

With reference to the first aspect or the second aspect, in some implementations, the first sequence is any one of the following: a ZC sequence, a GOLD sequence, an m sequence, and a pseudo-random sequence.

With reference to the first aspect or the second aspect, in some implementations, the frequency domain unit is a resource element or a subcarrier.

With reference to the first aspect or the second aspect, in some implementations, a signal power of the first symbol is not 0, and a signal power of the second symbol is 0; or a signal power of the first symbol is greater than or equal to a first threshold, a signal power of the second symbol is less than or equal to a second threshold, and the first threshold is greater than or equal to the second threshold.

According to a third aspect, a communication method is provided. The method may be performed by a communication apparatus. The communication apparatus may be a device (for example, referred to as a transmit end device such as a network device), or may be a component (for example, a chip, a chip system, or a circuit) of the device. This is not limited in this application.

The method may include: sending a reference signal, where the reference signal is generated based on a second sequence, the reference signal includes X on-off keying OOK symbols, the X OOK symbols include X1 first symbols and X2 second symbols, the first symbol indicates a first bit value, the second symbol indicates a second bit value, subsequences of the second sequence correspond to the X1 first symbols, X is an integer greater than 1, X1 and X2 are integers greater than or equal to 0, and X1+X2=X.

According to a fourth aspect, a communication method is provided. The method may be performed by a communication apparatus. The communication apparatus may be a device (for example, referred to as a receive end device such as a terminal device), or may be a component (for example, a chip, a chip system, or a circuit) of the device. This is not limited in this application.

The method may include: receiving a reference signal, where the reference signal is generated based on a second sequence, the reference signal includes X on-off keying OOK symbols, the X OOK symbols include X1 first symbols and X2 second symbols, the first symbol indicates a first bit value, the second symbol indicates a second bit value, subsequences of the second sequence correspond to the X1 first symbols, X is an integer greater than 1, X1 and X2 are integers greater than or equal to 0, and X1+X2=X.

Based on the technical solution, considering that first sequences of a plurality of lengths may need to be generated and/or pre-stored for reference signals of different lengths, a requirement on storage space is high. Therefore, a second sequence with a long length may be generated and/or pre-stored. When a reference signal needs to be sent, the second sequence with a long length may be processed (for example, truncated) based on a length of the reference signal, to obtain a first sequence with a short length.

With reference to the third aspect or the fourth aspect, in some implementations, a start position of a sequence used to generate the reference signal is a start position of the second sequence; or a start position of a sequence used to generate the reference signal is determined based on a time domain resource occupied by the reference signal.

With reference to the third aspect or the fourth aspect, that the reference signal is generated based on the second sequence includes: The reference signal is generated based on the subsequences of the second sequence.

The subsequence (namely, a sequence used to generate the reference signal) of the second sequence may also be referred to as a first sequence. For the first sequence, refer to the related descriptions in the first aspect or the second aspect. Details are not described herein again.

According to a fifth aspect, a communication method is provided. The method may be performed by a communication apparatus. The communication apparatus may be a device (for example, referred to as a transmit end device such as a network device), or may be a component (for example, a chip, a chip system, or a circuit) of the device. This is not limited in this application.

The method may include: sending a reference signal, where the reference signal is generated based on a second sequence, the reference signal includes X on-off keying OOK symbols, the X OOK symbols include X1 first symbols and X2 second symbols, the first symbol indicates a first bit value, the second symbol indicates a second bit value, the second sequence corresponds to a partial X1 first symbols, X is an integer greater than 1, X1 and X2 are integers greater than or equal to 0, and X1+X2=X.

Optionally, one second sequence corresponds to at least two first symbols.

According to a sixth aspect, a communication method is provided. The method may be performed by a communication apparatus. The communication apparatus may be a device (for example, referred to as a receive end device such as a terminal device), or may be a component (for example, a chip, a chip system, or a circuit) of the device. This is not limited in this application.

The method may include: receiving a reference signal, where the reference signal is generated based on a second sequence, the reference signal includes X on-off keying OOK symbols, the X OOK symbols include X1 first symbols and X2 second symbols, the first symbol indicates a first bit value, the second symbol indicates a second bit value, the second sequence corresponds to a partial X1 first symbols, X is an integer greater than 1, X1 and X2 are integers greater than or equal to 0, and X1+X2=X.

Based on the technical solution, considering that if the reference signal has a long length and includes a large quantity of OOK symbols (for example, hundreds of OOK symbols or even thousands of OOK symbols), a length of a sequence used to generate the reference signal is also very long. As a result, complexity of generating the reference signal based on the sequence with a long length is high. In addition, if the sequence used to generate the reference signal is pre-stored, a longer sequence length may also have a higher requirement on storage space. Therefore, a second sequence whose length is shorter than that of the first sequence may be generated, or the second sequence is pre-stored, and then the second sequence is processed, for example, a plurality of second sequences are concatenated, to obtain a first sequence with a long length.

With reference to the fifth aspect or the sixth aspect, in some implementations, a sequence used to generate the reference signal is obtained by concatenating L second sequences, L is not equal to X1, and L is an integer greater than 1.

With reference to the fifth aspect or the sixth aspect, that the reference signal is generated based on the second sequence includes: The reference signal is generated based on at least two second sequences.

The at least two second sequences (namely, sequences used to generate the reference signal) may also be collectively referred to as a first sequence. For the first sequence, refer to the related descriptions in the first aspect or the second aspect. Details are not described herein again.

According to a seventh aspect, a communication apparatus is provided. The apparatus is configured to perform the method according to any one of the first aspect to the sixth aspect. Specifically, the apparatus may include a unit and/or a module, for example, a processing unit and/or a communication unit, configured to perform the method according to any one of the implementations of any one of the first aspect to the sixth aspect.

In an implementation, the apparatus is a communication device (for example, a terminal device or a network device). When the apparatus is the communication device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in the communication device. When the apparatus is the chip, the chip system, or the circuit used in the device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a communication apparatus is provided. The apparatus includes at least one processor, configured to perform the method according to any one of the implementations of any one of the first aspect to the sixth aspect. Optionally, the apparatus further includes a memory, configured to store a program. Correspondingly, the at least one processor is configured to execute a computer program or instructions stored in the memory.

In an implementation, the apparatus is a communication device (for example, a terminal device or a network device).

In another implementation, the apparatus is a chip, a chip system, or a circuit used in the communication device.

According to a ninth aspect, this application provides a processor, configured to perform the methods according to the foregoing aspects.

Operations such as sending and obtaining/receiving related to the processor may be understood as operations such as outputting and inputting of the processor or sending and receiving operations performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method according to any one of the implementations of any one of the first aspect to the sixth aspect.

According to an eleventh aspect, a computer program product including instructions is provided. When the computer program product runs on a computer, the computer is enabled to perform the method according to any one of the implementations of any one of the first aspect to the sixth aspect.

According to a twelfth aspect, a chip is provided. The chip includes a processor and a communication interface. The processor reads, through the communication interface, instructions stored in a memory, to perform the method according to any one of the implementations of any one of the first aspect to the sixth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the implementations of any one of the first aspect to the sixth aspect.

According to a thirteenth aspect, a communication system is provided. The communication system includes a first communication apparatus and a second communication apparatus. The first communication apparatus is configured to perform the method according to any one of the implementations of the first aspect, and the second communication apparatus is configured to perform the method according to any one of the implementations of the second aspect; or the first communication apparatus is configured to perform the method according to any one of the implementations of the third aspect, and the second communication apparatus is configured to perform the method according to any one of the implementations of the fourth aspect; or the first communication apparatus is configured to perform the method according to any one of the implementations of the fifth aspect, and the second communication apparatus is configured to perform the method according to any one of the implementations of the sixth aspect.

### BRIEF DESCRIPTION OF DRAWINGS

FIG. 1 is a diagram of a wireless communication system applicable to an embodiment of this application;
FIG. 2 is a diagram of a main circuit and a wake up circuit;
FIG. 3 is a diagram of a waveform of a signal during OOK modulation;
FIG. 4 is a diagram of a waveform of a signal for which Manchester encoding is used;
FIG. 5 is another diagram of a waveform of a signal for which Manchester encoding is used;
FIG. 6 and FIG. 7 are diagrams of an OOK symbol in time domain and frequency domain;
FIG. 8 is a diagram of an OFDM symbol and an OOK symbol;
FIG. 9 is a diagram of a waveform of a signal that passes through a channel;
FIG. 10 is a diagram of an OFDM symbol;
FIG. 11 is a diagram of a communication method 1100 according to an embodiment of this application;
FIG. 12 is a diagram of a first sequence and a reference signal that are applicable to an embodiment of this application;
FIG. 13 is another diagram of a first sequence and a reference signal that are applicable to an embodiment of this application;
FIG. 14 is a diagram of a second sequence and a reference signal that are applicable to an embodiment of this application;
FIG. 15 and FIG. 16 are other diagrams of a second sequence and a reference signal that are applicable to an embodiment of this application;
FIG. 17 is a diagram of processing a reference signal by a receive end device applicable to an embodiment of this application;
FIG. 18 is a block diagram of a communication apparatus 1800 according to an embodiment of this application;
FIG. 19 is a diagram of another communication apparatus 1900 according to an embodiment of this application; and
FIG. 20 is a diagram of a chip system 2000 according to an embodiment of this application.

### DESCRIPTION OF EMBODIMENTS

The following describes technical solutions of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC) system, or an internet of things (internet of things, IoT) communication system. The technical solutions provided in this application may be further applied to a non-terrestrial communication network (non-terrestrial network, NTN) system such as an inter-satellite communication system and a satellite communication system.

In an example, the satellite communication system includes a satellite base station and a terminal device. The satellite base station provides a communication service for the terminal device. The satellite base station may also communicate with a base station. A satellite may be used as the base station, or may be used as the terminal device. The satellite may be an uncrewed aerial vehicle, a hot air balloon, a low Earth orbit satellite, a medium Earth orbit satellite, a high Earth orbit satellite, or the like. The satellite may alternatively be a non-terrestrial base station, a non-terrestrial device, or the like.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication.

A device in a communication system may send a signal to another device or receive a signal from another device. The signal may include information, signaling, data, or the like. The device may alternatively be replaced with an entity, a network entity, a communication device, a communication module, a node, a communication node, or the like. In this disclosure, the device is used as an example for description.

The terminal device in embodiments of this application includes various devices having a wireless communication function, and the terminal device may be configured to be connected to a person, an object, a machine, and the like. The terminal device may be widely used in various scenarios, for example, cellular communication, D2D, V2X, peer-to-peer (peer-to-peer, P2P), M2M, MTC, IoT, virtual reality (virtual reality, VR), augmented reality (augmented reality, AR), industrial control, automated driving, telemedicine, a smart grid, smart furniture, a smart office, smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, an aircraft (for example, an uncrewed aerial vehicle, a helicopter, a multi-helicopter, a four-helicopter, or an airplane), a ship, a remote control device, a smart home device, an industrial device, an apparatus built in the foregoing device (for example, a communication module, a modem, or a chip in the foregoing device), or another processing device connected to a wireless modem. For ease of description, an example in which the terminal device is the terminal or the UE is used below for description.

It should be understood that, in some scenarios, the UE may be alternatively configured to serve as a base station. For example, the UE may serve as a scheduling entity that provides a sidelink signal between UEs in a scenario such as V2X, D2D, or P2P.

In embodiments of this application, an apparatus configured to implement a function of the terminal device, namely, a terminal apparatus, may be a terminal device; or may be an apparatus that can support the terminal device in implementing the function, for example, a chip system or a chip, where the apparatus may be installed in the terminal device. In embodiments of this application, the chip system may include a chip, or may include a chip and another discrete component.

In embodiments of this application, the network device may be a device for communicating with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmission point, a master station, a secondary station, a multi-standard radio (motor slide retainer, MSR) node, a home NodeB, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D communication, V2X communication, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In another example, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane node (a central unit-control plane (central unit-control plane, CU-CP)), a CU user plane node (a central unit-user plane (central unit-user plane, CU-UP)), and a DU node.

In embodiments of this application, an apparatus configured to implement a function of the network device may be a network device; or may be an apparatus that can support the network device in implementing the function, for example, a chip system or a chip, where the apparatus may be installed in the network device. In embodiments of this application, the chip system may include a chip, or may include a chip and another discrete component.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application.

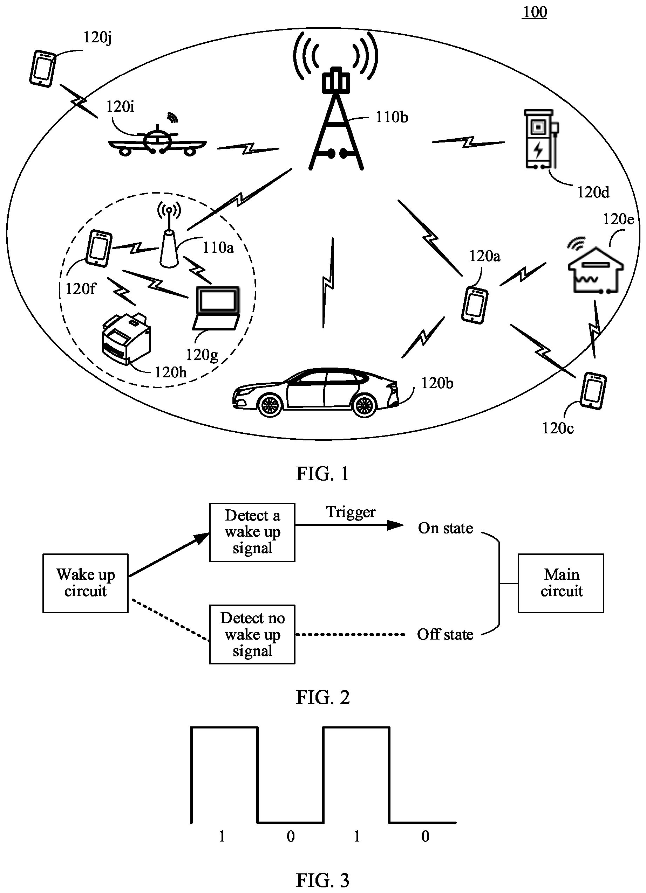

First, a communication system applicable to embodiments of this application is briefly described with reference to FIG. 1. The following is an example.

In an example, FIG. 1 is a diagram of a wireless communication system applicable to an embodiment of this application. As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, collectively referred to as 12) may be interconnected or connected to one or more network devices (110a and 110b, which are collectively referred to as 110) in the radio access network 100. Network elements in the wireless communication system are connected to each other through an interface (for example, NG or Xn) or an air interface.

When the network device communicates with the terminal device, the network device may manage one or more cells, and one cell may include at least one terminal device. A cell may be understood as an area within coverage of a radio signal of the network device.

FIG. 1 is only a diagram. The wireless communication system may further include another device, for example, may further include a core network device, a wireless relay device, and/or a wireless backhaul device, which are not shown in FIG. 1.

For ease of understanding of embodiments of this application, terms in this application are briefly described.
1. Wake up circuit: The wake up circuit, also referred to as a wake up receiver (wake up receiver, WUR), a low-power wake up receiver (low-power wake up receiver, LP-WUR), or a wake up module, may be understood as a separate low-power small circuit, for example, a circuit used by the terminal device in an idle state. The low-power small circuit may be implemented by using a separate small circuit with a simple structure or a chip, and has low power consumption. It may be understood that the wake up circuit is merely named for differentiation, and a specific name of the wake up circuit does not limit the protection scope of this application. For example, without loss of generality, the wake up circuit may also be described as a first circuit (or a first module). The wake up circuit is uniformly used for description below.

A signal received by the terminal device by using the wake up circuit may be referred to as transmission on a wake up link. The wake up link represents a connection relationship between the terminal device and the network device, and is a logical concept rather than a physical entity. It may be understood that the wake up link is merely named for differentiation, and a specific name of the wake up link does not limit the protection scope of this application. For example, without loss of generality, the wake up link may also be described as a first link. The wake up link is uniformly used for description below.

The signal received by the terminal device by using the wake up circuit may be referred to as a wake up signal (wake up signal/radio, WUS/WUR) or a low-power wake up signal (low-power wake up signal, LP-WUS). It may be understood that the wake up signal is merely named for differentiation, and a specific name of the wake up signal does not limit the protection scope of this application. For example, without loss of generality, the wake up signal may also be referred to as a signal. The wake up signal is uniformly used for description below.

2. Main circuit: The main circuit, also referred to as a main receiver (main receiver, MR) or a main module, may be understood as a circuit used when the terminal device normally performs transmission of data, or a circuit used when the terminal device performs transmission of data in a connected state. When the terminal device performs transmission of data by using the main circuit, power consumption is high. It may be understood that the main circuit is merely named for differentiation, and a specific name of the main circuit does not limit the protection scope of this application. For example, without loss of generality, the main circuit may also be described as a second circuit (or a second module). The main circuit is uniformly used for description below.

A signal received by the terminal device by using the main circuit may be referred to as transmission on a main link. The main link represents a connection relationship between the terminal device and the network device, and is a logical concept rather than a physical entity. It may be understood that the main link is merely named for differentiation, and a specific name of the main link does not limit the protection scope of this application. For example, without loss of generality, the main link may also be described as a second link. The main link is uniformly used for description below.

In the following, for differentiation, a signal on which transmission is performed by the terminal device by using the main circuit is denoted as a data signal.

In an example, FIG. 2 is a diagram of a main circuit and a wake up circuit.

As shown in FIG. 2, the terminal device may receive (or referred to as detect) a wake up signal by using the wake up circuit, and the terminal device may receive a data signal by using the main circuit. It is assumed that the terminal device receives the wake up signal by using the wake up circuit. If the terminal device detects no wake up signal, the terminal device continues receiving the wake up signal by using the wake up circuit, and the main circuit may be in an off state (or a sleep state). If the terminal device detects the wake up signal, the terminal device triggers wake up of the main circuit, that is, enables the main circuit to be in/be switched to an on state (or referred to as a working state or an active state). After the main circuit is turned on, the terminal device may perform transmission of the data signal by using the main circuit.

3. On-off keying (on-off keying, OOK) modulation: The on-off keying modulation is used to modulate information depending on whether a signal is sent, and the signal may be received by using a corresponding wake up circuit with an envelope detection method. In an OOK modulation technology, demodulation can be implemented by a receiver with extremely low complexity, so that an objective of low power consumption of the wake up circuit can be achieved. To ensure a power consumption gain, OOK modulation may be used for the wake up signal. It may be understood that another modulation manner may alternatively be used for the wake up signal. This is not limited.

When OOK modulation is used for a signal, each bit (namely, an encoded bit) may correspond to one symbol (symbol). Equivalently, a symbol may also be referred to as a chip (chip), or may be referred to as another name. This is not limited herein.

For example, when a bit (bit) is "1", a signal is sent in a symbol length (that is, a signal transmit power in the symbol length is not 0). When a bit is "0", no signal is sent in a symbol length (that is, a signal transmit power in the symbol length is 0). Alternatively, it may be understood that, in OOK modulation, if energy is sent, it indicates that a bit is "1". If no energy is sent, it indicates that a bit is "0".

For another example, when a bit is "0", a signal is sent in a symbol length (that is, a signal transmit power in the symbol length is not 0). When a bit is "1", no signal is sent in a symbol length (that is, a signal transmit power in the symbol length is 0). Alternatively, it may be understood that, in OOK modulation, if energy is sent, it indicates that a bit is "0". If no energy is sent, it indicates that a bit is "1".

For ease of description, an example in which when the bit is "1", the signal is sent in the symbol length; and when the bit is "0", no signal is sent in the symbol length is mainly used for description below.

In addition, for ease of description, if a signal is sent in a symbol, the symbol is denoted as an ON symbol (symbol). If no signal is sent in a symbol, the symbol is denoted as an OFF symbol. An example in which when the bit is "1", the signal is sent in the symbol length; and when the bit is "0", no signal is sent in the symbol length is used. An ON symbol indicates that an information bit is "1", and an OFF symbol indicates that an information bit is "0". The ON symbol may also be referred to as an ON signal, and the OFF symbol may also be referred to as an OFF signal. For uniformity, the ON symbol and the OFF symbol are used for description below.

In addition, an OOK symbol mentioned below indicates a symbol obtained through OOK modulation. The OOK symbol may be, for example, an ON symbol or an OFF symbol. For example, if an information bit is "1", the OOK symbol obtained through OOK modulation is the ON symbol. If an information bit is "0", the OOK symbol obtained through OOK modulation is the OFF symbol. The OOK symbol may also be referred to as an OOK signal. For uniformity, the OOK symbol is used for description below.

In an example, FIG. 3 is a diagram of a waveform of a signal during OOK modulation.

In an example, it is assumed that when a bit is "1", a signal is sent in a length of an OOK symbol; or when a bit is "0", no signal is sent in a length of an OOK symbol. Therefore, the waveform shown in FIG. 3 may indicate four bits "0100". To be specific, a 1^{st} bit is an OFF symbol, a 2^{nd} bit is an ON symbol, and both a 3^{rd} bit and a 4^{th} bit are OFF symbols. As shown in FIG. 3, a communication system generally uses a specific frequency (frequency) for sending, and a sent signal needs to be modulated on a carrier. At a receive end, the receive end detects an envelope (or energy) of the received signal, and determines whether an OOK symbol corresponds to the bit "0" or the bit "1", so as to complete demodulation.

4. Manchester (manchester) encoding: The Manchester encoding is biphase encoding, where a bit "0" or a bit "1" may be indicated through level conversion. For example, through Manchester encoding, the original bit "0" may be encoded as a bit "10", and the original bit "1" may be encoded as a bit "01". For differentiation, bits obtained by encoding the original bits, for example, the bits "10" and "01", may be referred to as encoded bits. When sending a signal, a transmit end may send 1-bit original information by using two OOK symbols. If the original bit "0" is encoded as the bit "10", and the original bit "1" is encoded as the bit "01", the original bit "0" corresponds to one ON symbol and then one OFF symbol, and the original bit "1" corresponds to one OFF symbol and then one ON symbol. When demodulating a signal for which Manchester encoding is used, the receive end may compare relative values of signal powers (or signal amplitudes) in two adjacent OOK symbols. If a signal power (or a signal amplitude) in a former OOK symbol is greater than a signal power (or a signal amplitude) in a latter OOK symbol, a received information bit is considered as "0". If the signal power in the former OOK symbol is less than the signal power in the latter OOK symbol, a received information bit is considered as "1". In this manner, an absolute threshold may not be selected for determining.

It may be understood that an example in which the original bit "0" is encoded as the bit "10", and the original bit "1" is encoded as the bit "01" is used for description above. This is not limited herein. For example, the original bit "0" is encoded as the bit "01", and the original bit "1" is encoded as the bit "10".

In an example, a signal may be generated based on an orthogonal frequency division multiplexing (orthogonal frequency division multiplexing, OFDM) transmitter, or a signal may be modulated using the OFDM transmitter.

In a possible manner, one OOK symbol is transmitted in a length of one OFDM symbol, or one OOK symbol occupies one OFDM symbol. For example, if an ON symbol needs to be sent in a length of one OOK symbol, the transmit end may send a specific signal, and make a contour of the signal in the length of the OOK symbol like a square wave as much as possible. If an OFF symbol needs to be sent in a length of one OOK symbol, the transmit end may disable time of the length of the OOK symbol.

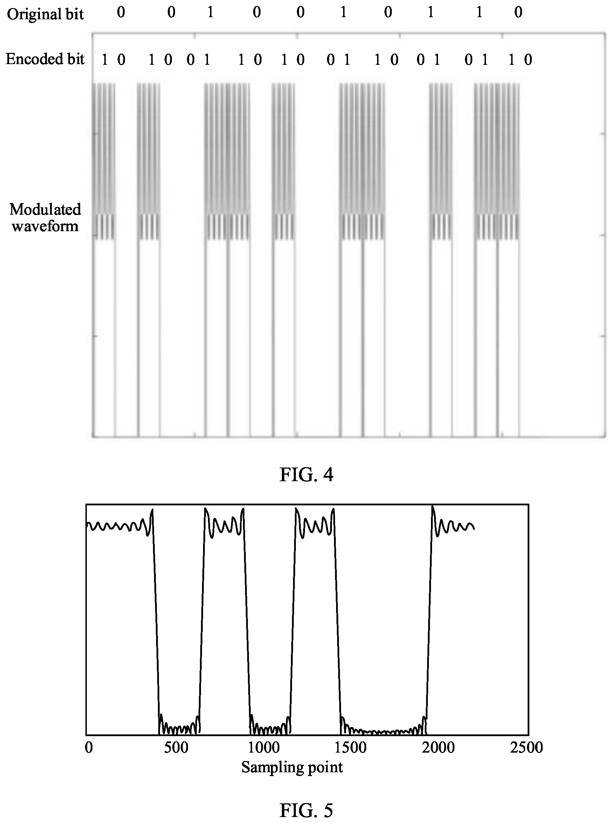

In an example, FIG. 4 is a diagram of a waveform of a signal for which Manchester encoding is used. As shown in FIG. 4, original bits are "0 0 1 0 0 1 0 1 1 0". Assuming that the original bit "0" is encoded as "10", and the original bit "1" is encoded as "01", encoded bits for which Manchester encoding is used are "10 10 01 10 10 01 10 01 01 10", and a waveform is shown in FIG. 4. A time length corresponding to each encoded bit may be considered as a length of one OFDM symbol. To be specific, one OOK symbol is transmitted in a length of one OFDM symbol, or one OOK symbol occupies one OFDM symbol. When demodulating a signal, the receive end may compare relative values of signal powers (or signal amplitudes) in two adjacent OOK symbols, and determine demodulated information bits based on a comparison result.

In the foregoing manner, one OOK symbol is transmitted in a length of one OFDM symbol. The manner is simple, but a supported data rate is also low. In the foregoing manner, regardless of a size of a signal bandwidth, one OOK symbol is transmitted in a length of one OFDM symbol. If a subcarrier spacing (subcarrier spacing, SCS) used by a system is 30 kHz, a length of a slot (slot) is 0.5 ms, and one slot includes 14 OFDM symbols, assuming that no encoding is used, and each OOK symbol carries 1-bit information, a supported maximum data rate is 1/0.5*14*1000=28 kbps.

To improve a data rate of an OOK symbol, in a possible manner, a length of the OOK symbol is shortened, that is, at least two OOK symbols are transmitted in a length of one OFDM symbol, or at least two OOK symbols occupy one OFDM symbol.

In an example, FIG. 5 is another diagram of a waveform of a signal for which Manchester encoding is used. As shown in FIG. 5, original bits are "0 0 0 1". Assuming that the original bit "0" is encoded as "10", and the original bit "1" is encoded as "01", encoded bits for which Manchester encoding is used are "10 10 10 10 01", and a waveform is shown in FIG. 5. In a length of one OFDM symbol (2192 sampling points in FIG. 5), eight OOK symbols are sent, which are respectively an ON symbol, an OFF symbol, an ON symbol, an OFF symbol, an ON symbol, an OFF symbol, an OFF symbol, and an ON symbol. When demodulating a signal, the receive end may compare relative values of signal powers (or signal amplitudes) in two adjacent OOK symbols, and determine demodulated information bits based on a comparison result.

To generate the foregoing waveform, in a possible implementation, a target waveform x in time domain is first determined, and then some operations such as discrete fourier transform (discrete fourier transform, DFT) and inverse fast fourier transform (inverse fast fourier transform, IFFT) are performed, to obtain a to-be-sent sequence.

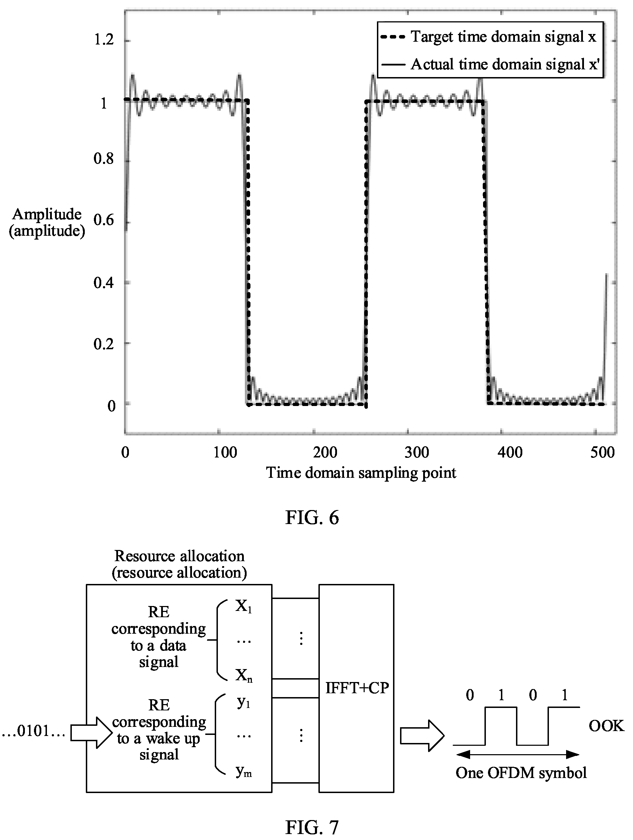

In an example, FIG. 6 and FIG. 7 are diagrams of an OOK symbol in time domain and frequency domain. As shown in FIG. 6, assuming that a waveform of "ON symbol-OFF symbol-ON symbol-OFF symbol" needs to be generated, the target waveform may be set to: x=[1, 1, ..., 1, 0, 0, ..., 0, 1, 1, ..., 1, 0, 0, ..., 0], or x=[e^{jθ1}, e^{jθ2}, ..., e^{jθn}, 0, 0, ..., 0, e^{jθ1}, e^{jθ2}, ..., e^{jθn}, 0, 0, ..., 0], that is, an amplitude of a part of the ON symbol is 1, and a phase of a part of the ON symbol may vary, as shown in FIG. 6. As shown in FIG. 7, DFT may be performed on x to obtain a frequency domain sequence y corresponding to x; then y is mapped to a frequency resource (for example, a frequency resource corresponding to a wake up signal); then IFFT is performed on a frequency domain signal; and a cyclic prefix (cyclic prefix, CP) is added to the signal on which IFFT is performed, to obtain a to-be-sent sequence x' (refer to a curve in FIG. 6). It can be learned from FIG. 6 that a shape of x is similar to a shape of x'. Therefore, at least two OOK symbols may be transmitted in a length of one OFDM symbol.

5. Sequence on top of OOK (sequence on top of OOK) or overlaid sequence over OOK (overlaid sequence over OOK): To generate an OOK waveform using an OFDM transmitter, a specific sequence (sequence) may be used or constructed, so that a finally sent signal forms a shape similar to that of an ON symbol or an OFF symbol (that is, the signal has high energy/high amplitude at some time positions, and the signal has low energy/low amplitude at some time positions).

In a possible implementation, the signal may be received in an envelope detection manner or an energy detection manner. For example, out-of-band noise/interference of a signal received by a receiver (which is referred to as an OOK receiver for differentiation) is first filtered out using a matching network and a radio frequency (radio frequency, RF) filter. Then, a spectrum is shifted to a baseband (baseband, BB) using a frequency mixer, and the out-of-band noise/interference is further filtered out using a baseband filter. Then, envelope detection/energy detection is performed on the signal (in this case, a value of a baseband signal is mathematically represented as a real number, and the baseband signal has only amplitude and no phase). Specifically, the OOK receiver determines whether the received signal is an ON symbol or an OFF symbol by detecting energy levels in different time ranges, and then performs subsequent processing. However, this receiving manner is greatly affected by in-band noise or interference. Because the OOK receiver determines only the energy level, and does not distinguish energy sources, noise (for example, in-band noise) and/or interference energy that are/is not filtered out by the filter are/is also considered as energy of a useful signal. Consequently, determining of the ON symbol/OFF symbol is affected. To further improve demodulation performance, a more advanced receiver, for example, a receiver (which is referred to as an OFDM receiver for differentiation) having two paths of in-phase (in-phase, I)/quadrature (quadrature, Q), may be considered.

In a possible implementation, out-of-band noise/interference of a signal received by the OFDM receiver is first filtered out using a matching network and a radio frequency filter. Then, a spectrum is shifted to a baseband using a frequency mixer. When the spectrum is shifted to the baseband, two branches of I and Q (corresponding frequency-mixed signals have a phase difference of pi/2) are distinguished, and out-of-band noise/interference of a signal on each branch is further filtered out using a baseband filter. Then, two signals are combined together. In this case, a value of a baseband signal is mathematically represented as a complex number, and the baseband signal has both an amplitude and a phase. Then, the baseband signal is further processed.

When the foregoing OOK symbol is received by using the OFDM receiver, because the OFDM receiver has a capability of detecting a signal phase, the OFDM receiver may further detect sequence information inside an ON symbol of the OOK symbol. For example, if the OFDM receiver can know in advance (for example, predefined in a protocol, or a network device pre-configures a related parameter for a terminal device) specific information of a sequence for generating an ON symbol, the OFDM receiver may generate a local sequence based on the sequence for generating the ON symbol, and perform correlation between a received signal and the local sequence, to reduce impact of noise (for example, in-band noise) and/or interference that are/is not filtered out by the filter, so as to improve the demodulation performance. Alternatively, if there may be a plurality of sequences for generating an ON symbol, the OFDM receiver may identify, through detection, which sequence is sent, to obtain more information. For example, it is assumed that there may be four sequences for generating the ON symbol, and the sequences respectively correspond to information {00, 01, 10, 11}. The OFDM receiver may obtain additional 2-bit information by detecting which sequence is used. In this way, a data rate carried in a wake up signal can be improved. The foregoing method for "enabling the OFDM receiver to know information about a sequence used to generate an OOK symbol, to improve demodulation performance and/or improve a data rate" may be referred to as the sequence on top of OOK or the overlaid sequence over OOK. An example is used for description below.

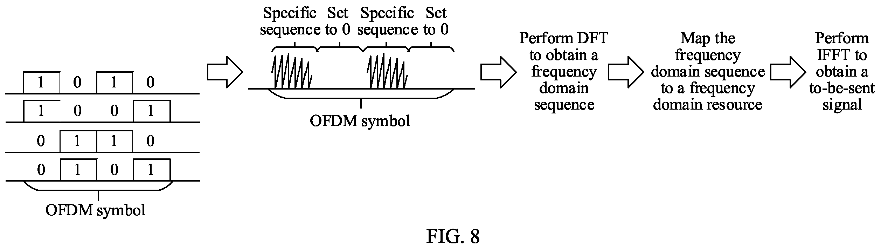

In an example, FIG. 8 is a diagram of an OFDM symbol and an OOK symbol. It is assumed that each OFDM symbol includes four OOK symbols. When Manchester encoding is used, there may be four cases shown in FIG. 8. Sending "1010" is used as an example. A position of "1" is set to a specific sequence, and a position of "0" is set to 0, to obtain a time domain sequence corresponding to a whole OFDM symbol; then a corresponding frequency domain sequence is obtained by using some algorithms (for example, through DFT or a least square (least square, LS) algorithm); the frequency domain sequence is mapped to a frequency domain resource corresponding to a wake up signal, to obtain a frequency domain signal; and finally, IFFT is performed on the frequency domain signal (and another NR downlink frequency domain signal), to obtain a to-be-sent signal.

To avoid performing a complex operation (for example, generating a time domain sequence and performing DFT or least square calculation) each time a signal is generated, the network device may pre-store a generated frequency domain sequence. As shown in FIG. 8, there are four possible signal sending cases in one OFDM symbol. Therefore, the network device may pre-store four possible frequency domain sequences. The network device may select, based on OOK information that needs to be sent in each OFDM symbol, one of the four possible frequency domain sequences for use. In this manner, it can be learned that the same "specific sequence" is used to generate OOK ON symbols. At a receive end, the OOK receiver may determine an energy level in each OOK symbol for demodulation; and the OFDM receiver may detect a sequence, to improve demodulation performance and/or improve a data rate.

6. Low-power synchronization signal (low-power synchronization signal, LP-SS): The low-power synchronization signal may be used to implement synchronization and RRM measurement functions.

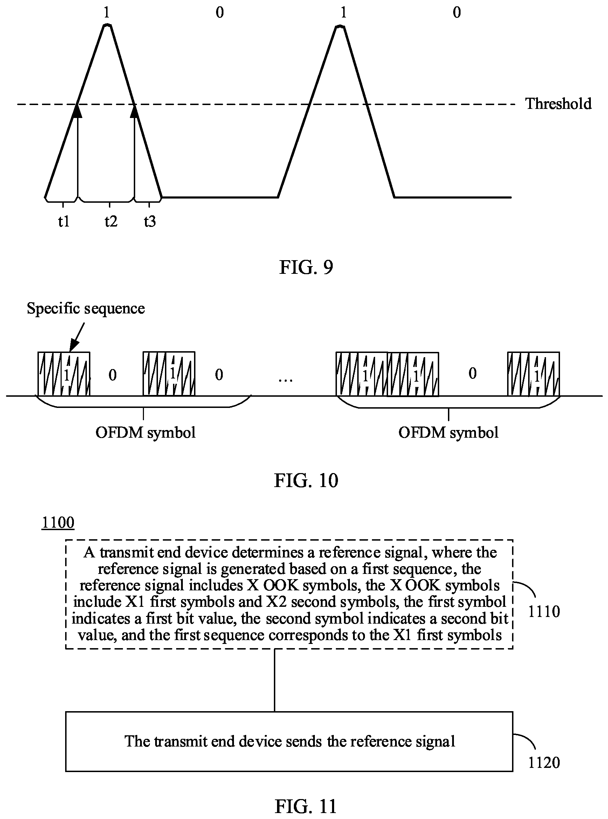

After a signal passes through a channel, distortion may occur due to impact of a channel state and the like. The waveform modulated by using OOK shown in FIG. 3 is used as an example. The waveform shown in FIG. 3 may become a waveform shown in FIG. 9 at a receive end.

In an example, FIG. 9 is a diagram of a waveform of a signal that passes through a channel. To determine whether a signal corresponds to a bit "0" or a bit "1", a terminal device may compare a level value of the received signal with a threshold (the threshold is shown by a dashed line in FIG. 11). For example, if the level value of the signal received by the terminal device is greater than the threshold, it indicates that the signal corresponds to the bit "1". If the level value of the signal received by the terminal device is less than the threshold, it indicates that the signal corresponds to the bit "0". As shown in FIG. 9, if a time position at which the terminal device compares the level value of the received signal with the threshold is within a range of t2, determining is accurate. If a time position at which the terminal device compares the level value of the received signal with the threshold is within a range of t1 or t3, determining is inaccurate, that is, 1 is incorrectly determined as 0.

Therefore, when the terminal device receives a wake up signal by using a wake up circuit, to correctly receive the wake up signal, time synchronization of a wake up link needs to be obtained. In other words, the terminal device may obtain a boundary position of a symbol, and determine, based on the boundary position, whether the signal corresponds to a time position of 0 or 1. For example, the terminal device may determine, by using a level value at a middle position of a symbol, whether the signal corresponds to 0 or 1. In addition, because local clock precision of the terminal device is limited, time drift may occur. If the wake up link does not provide a synchronization function, after the terminal device works on the wake up link for a period of time, a problem of time asynchronization between the terminal device and a network device may occur (that is, symbol boundary positions considered by the terminal device and the network device are inconsistent). Consequently, signal receiving is affected.

To support the synchronization function, an LP-SS may be introduced. Specifically, the terminal device may complete the synchronization function based on the LP-SS. In an example, the LP-SS is periodically sent.

In an example, a modulation scheme of the LP-SS is OOK. In addition, a pattern (pattern) (or referred to as a mode or pattern) of ON symbols/OFF symbols of the LP-SS may follow a specific order to enhance detection performance on the LP-SS. For example, the LP-SS may be generated based on a binary sequence (binary sequence) with a good autocorrelation property. That the modulation scheme of the LP-SS is OOK may alternatively be described as that in a time interval corresponding to the LP-SS, there is energy at some time domain positions, and there is no energy at some time domain positions.

In an example, the LP-SS may be received using the OFDM receiver. In addition, if the OFDM receiver can know in advance information about a sequence used to generate each OOK symbol of the LP-SS, the OFDM receiver may perform correlation between the received LP-SS and a local sequence, to reduce impact of noise/interference and improve synchronization accuracy. In a possible implementation, the LP-SS may be generated in a manner similar to the foregoing OOK symbol generation manner.

In an example, FIG. 10 is a diagram of an OFDM symbol. As shown in FIG. 10, at a position of each ON symbol, a same sequence (for example, a complex number sequence) may be used to generate a signal in each OFDM symbol occupied by an LP-SS. It may be understood that one LP-SS occupies a plurality of OOK symbols, and also occupies a plurality of OFDM symbols. As described above, an ON symbol/OFF symbol pattern corresponding to OOK symbols (which is referred to as a pattern corresponding to OOK symbols for short) may be a binary sequence that follows good autocorrelation, which is represented by 1/0 in FIG. 10. It can be learned from FIG. 10 that the pattern corresponding to the OOK symbols is a sequence with a coarser granularity, and each element in the sequence corresponds to one OOK symbol. A sequence for generating an LP-SS (which is referred to as a sequence corresponding to the LP-SS for differentiation) is a sequence for generating one OOK symbol (namely, one ON symbol). In other words, the sequence for generating the LP-SS is a sequence inside the OOK symbol. Each element in the sequence corresponding to the LP-SS corresponds to a part of one OOK symbol. Therefore, the sequence corresponding to the LP-SS is a sequence with a finer granularity. For an OFF symbol, in an example, an "all-zero" sequence may be used.

Generally, autocorrelation performance of a sequence and a capability of resisting interference and noise are related to a length of the sequence. Generally, a longer length of a sequence indicates better autocorrelation performance and a stronger capability of resisting interference and noise. In a possible implementation, the LP-SS is generated in the foregoing manner. If the foregoing manner is used, at a position of each ON symbol, a same sequence is used to generate a signal in each OFDM symbol occupied by the LP-SS, that is, the same "specific sequence" is used to generate the LP-SS in each ON symbol. Due to a limitation of a length of the ON symbol and a bandwidth of the LP-SS, a length of the "specific sequence" is not particularly long. As a result, detection performance of the OFDM receiver on the LP-SS is also limited. For example, assuming that each OFDM symbol includes four OOK symbols, and a bandwidth of an LP-SS is N resource elements (resource elements, REs), a length of a "specific sequence" (or an "all-zero sequence") may be N/4, and a total length of sequences corresponding to the four OOK symbols (each OOK symbol uses either the "specific sequence" or the "all-zero sequence") is N, which can match the bandwidth (N REs) of the LP-SS during a DFT operation.

Based on this, it may be considered that the LP-SS is generated based on a long sequence. For example, a transmit end device may divide the long sequence into several small segments, and then each small segment corresponds to a different OOK symbol. A receive end device concatenates the small segments, and performs correlation between the concatenated small segment and a local sequence. Because the long sequence has good autocorrelation performance, detection performance on the LP-SS can be improved. This solution is described below in detail.

It should be noted that in this application, "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for sending separately; and sending periodicities and/or sending occasions of these pieces of sub-information may be the same or different.

In addition, in this application, the expression "/" indicates an "or" relationship between associated objects. For example, A/B may indicate A or B. The expression "and/or" represents that there may be an and association relationship or an or association relationship between the associated objects. For example, A and/or B may indicate the following cases: Only A exists, only B exists, or both A and B exist, where A and B may be singular or plural. "At least one of the following" or a similar expression thereof represents any combination of the listed items. For example, at least one of A, B, and (or) C may represent the following cases: Only A exists, only B exists, only C exists, both A and B exist, both B and C exist, both A and C exist, and both A, B, and C exist, where A, B, and C may be singular or plural.

The following describes in detail the method provided in embodiments of this application with reference to the accompanying drawings. Embodiments provided in this application may be applied to the scenario shown in the foregoing figure. This is not limited.

In an example, FIG. 11 is a diagram of a communication method 1100 according to an embodiment of this application. For ease of description, an example in which an execution body of the method 1100 is a transmit end device (for example, a terminal device or a network device) is used below for description. It may be understood that the execution body of the method 1100 may alternatively be a component of the transmit end device, for example, a chip, a chip system, or a circuit. This is not limited herein. Steps performed by a single execution body described below may alternatively be performed by a plurality of execution bodies. These execution bodies may be logically and/or physically separated. The method 1100 shown in FIG. 11 may include the following steps.

The method 1100 includes step 1120. Optionally, the method 1100 includes step 1110.

1110: The transmit end device determines a reference signal.

The reference signal is generated based on a first sequence, the reference signal includes X OOK symbols, the X OOK symbols include X1 first symbols and X2 second symbols, the first symbol indicates a first bit value, the second symbol indicates a second bit value, and the first sequence corresponds to the X1 first symbols.

X is an integer greater than 1, X1 and X2 are integers greater than or equal to 0, and X1+X2=X.

That the reference signal is generated based on the first sequence may alternatively be replaced with that the reference signal is determined based on the first sequence.

That the first sequence corresponds to X1 OOK symbols indicates that the X1 first symbols in the reference signal are generated (or determined) based on the first sequence. Therefore, the reference signal may alternatively be expressed as follows: The reference signal includes X OOK symbols, the X OOK symbols include X1 first symbols and X2 second symbols, the first symbol indicates a first bit value, the second symbol indicates a second bit value, and the X1 first symbols are generated based on the first sequence.

In an example, determining the reference signal includes: determining sending time of the reference signal, generating the reference signal, or obtaining a pre-stored reference signal from a memory.

The first bit value is different from the second bit value. In an example, the first bit value is "1", and the second bit value is "0". In another example, the first bit value is "0", and the second bit value is "1". In the following embodiments, for ease of description, an example in which the first bit value is "1" and the second bit value is "0" is used for description.

The example shown in FIG. 3 is used as an example. The reference signal includes four OOK symbols, and the four OOK symbols include two first symbols and two second symbols. A 1^{st} OOK symbol and a 3^{rd} OOK symbol are first symbols, and a first bit value indicated by the first symbol is "1". A 2^{nd} OOK symbol and a 4^{th} OOK symbol are second symbols, and a second bit value indicated by the second symbol is "0".

A signal power of the first symbol is different from a signal power of the second symbol, and the signal power of the first symbol is greater than the signal power of the second symbol.

In an example, the signal power of the first symbol is not 0, and the signal power of the second symbol is 0. Based on this, it can be learned that a modulation scheme of the reference signal is OOK modulation. If the signal power of the first symbol is not 0, it indicates that a signal amplitude of the first symbol is not 0, that is, a signal is sent in one time unit (for example, in one OOK symbol). If the signal power of the second symbol is 0, it indicates that a signal amplitude of the second symbol is 0, that is, no signal is sent in one time unit (for example, in one OOK symbol).

In another example, the signal power of the first symbol is greater than or equal to a first threshold, the signal power of the second symbol is less than or equal to a second threshold, and the first threshold is greater than or equal to the second threshold. Due to a non-ideal characteristic of an electronic component, even if a signal power expected to be sent is 0, an actually sent signal power may be greater than 0. Therefore, when the signal power of the second symbol is less than or equal to the second threshold, it may be approximately considered that the signal power of the second symbol is 0. Based on this, it can be learned that a modulation scheme of the reference signal is OOK modulation.

The first symbol may also be referred to as an ON symbol, and the second symbol may also be referred to as an OFF symbol. For the ON symbol and the OFF symbol, refer to the descriptions in the foregoing term explanation part. Details are not described herein again.

In an example, the reference signal is a synchronization reference signal. For example, the reference signal is an LP-SS.

In an example, the first sequence is any one of the following: a ZC sequence, a GOLD sequence, an m sequence, and a pseudo-random (pseudo-noise, PN) sequence. It may be understood that a specific manner of the first sequence is not limited. For example, any sequence having an autocorrelation property is applicable to this embodiment of this application.

1120: The transmit end device sends the reference signal.

In an example, the reference signal is periodically sent.

In an example, sending the reference signal includes: sending the reference signal at the sending time of the reference signal, or sending the reference signal based on the sending time of the reference signal. Specifically, the transmit end device determines the sending time of the reference signal, and then sends the reference signal at the sending time of the reference signal, or sends the reference signal based on the sending time of the reference signal.

Correspondingly, the receive end device receives the reference signal.

In an example, the transmit end device is a network device, and the receive end device is a terminal device. In this case, the reference signal is a downlink reference signal.

In another example, the transmit end device is a terminal device, and the receive end device is a network device. In this case, the reference signal is an uplink reference signal.

In this embodiment of this application, the reference signal is generated based on the first sequence, and the first sequence corresponds to the X1 OOK symbols in the reference signal. In this way, the reference signal can be generated by using a sequence (for example, a long sequence). Because the long sequence has good autocorrelation performance, detection performance on the reference signal can be improved.

Optionally, the receive end device processes the reference signal.

In a possible case, the receive end device performs time synchronization based on the reference signal, for example, determines downlink timing. That the receive end device performs time synchronization based on the reference signal may include: The receive end device performs correlation processing on the reference signal based on the first sequence, and performs time synchronization based on a result of the correlation processing.

In an example, the receive end device performs correlation processing on the reference signal based on the first sequence. For example, the receive end device obtains a to-be-processed signal based on a pattern corresponding to the X OOK symbols, and performs correlation processing on the to-be-processed signal based on the first sequence. For example, the receive end device determines a local sequence based on the first sequence, and then performs correlation processing on the local sequence and the to-be-processed signal. That the receive end device determines the local sequence based on the first sequence may include: For example, the receive end device processes (for example, performs spectrum spreading processing or oversampling processing on) the first sequence to obtain the local sequence. It may be understood that the local sequence is merely described for differentiation, and a name of the local sequence does not limit the protection scope of this embodiment of this application. It may be further understood that, in some cases, the local sequence may alternatively be the first sequence. This is not limited herein.

The pattern corresponding to the X OOK symbols, or referred to as a pattern corresponding to the first symbols/second symbols, may represent (may indicate or may identify) position distribution of all the X OOK symbols, or may represent (may indicate or may identify) position distribution of the first symbols and/or the second symbols in the X OOK symbols. For example, the pattern corresponding to the X OOK symbols represents positions and/or an order of the X1 first symbols and the X2 second symbols.

In another possible case, the receive end device performs radio resource management (radio resource management, RRM) measurement (RRM measurement) based on the reference signal. In an example, the RRM measurement (or may be referred to as cell measurement) includes serving cell (serving cell) measurement and neighbor cell (neighbor cell) measurement. In an example, the neighbor cell measurement includes: intra-frequency (intra-frequency) measurement, inter-frequency (inter-frequency) measurement, and inter-radio access technology (inter-radio access technology, inter-RAT) measurement.

Optionally, the first sequence includes X1 subsequences, and each of the X1 subsequences corresponds to one first symbol.

Each of the X1 subsequences corresponds to one first symbol, that is, the subsequences one to one correspond to the first symbols. In other words, the X1 subsequences one to one correspond to the X1 first symbols.

Based on this, the first sequence may be divided into the X1 subsequences. In other words, the first sequence may be considered as a combination of the X1 subsequences. In this way, each subsequence may correspond to one first symbol, and the X1 subsequences correspond to the X1 first symbols.

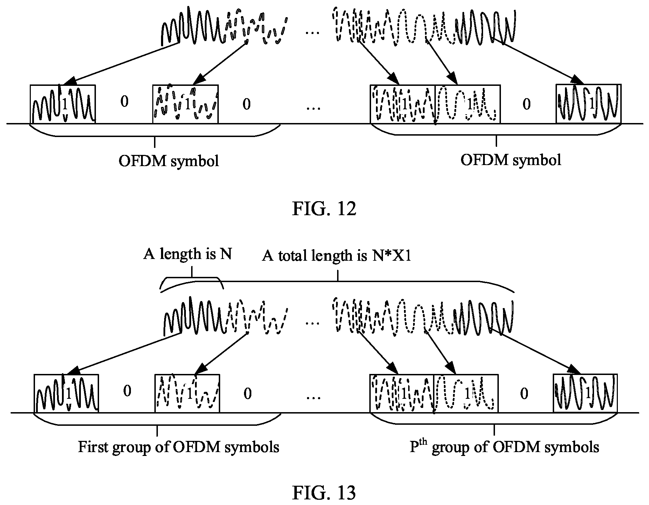

In an example, FIG. 12 is a diagram of a first sequence and a reference signal that are applicable to an embodiment of this application. As shown in FIG. 12, the reference signal includes a plurality of OOK symbols, and the first sequence corresponds to the plurality of OOK symbols. Specifically, the first sequence corresponds to first symbols in the plurality of OOK symbols. In FIG. 12, "1" indicates that a signal is sent in an OOK symbol, that is, the OOK symbol is an ON symbol; and "0" indicates that no signal is sent in an OOK symbol, that is, the OOK symbol is an OFF symbol. As shown in FIG. 12, the first sequence may be divided into a plurality of subsequences, and each subsequence corresponds to one OOK symbol. Specifically, each subsequence corresponds to one ON symbol. For an OFF symbol, processing may not be performed or 0 is filled. This is not limited.

Optionally, the reference signal is generated based on the first sequence and the pattern corresponding to X OOK symbols.

For example, FIG. 12 is used as an example. The transmit end device may map the first sequence to different OOK symbols based on the pattern corresponding to the X OOK symbols. Specifically, positions of the X1 first symbols may be identified based on the pattern corresponding to the X OOK symbols, so that the first sequence may be mapped to the X1 first symbols.

Optionally, a length of the first sequence is N*X1, where N indicates a quantity of frequency domain units occupied by the reference signal.

In frequency domain, a resource may include one or more frequency domain units. In an example, a frequency domain unit may be a resource element (resource element, RE), a resource block (resource block, RB), a subcarrier (subcarrier), a resource block group (resource block group, RBG), a subband (subband), a precoding resource block group (precoding resource block group, PRG), a bandwidth part (bandwidth part, BWP), a carrier, a serving cell, or the like.

In an example, the reference signal may be sent using an OFDM transmitter.

Optionally, the reference signal occupies P OFDM symbols, the first sequence includes P groups of subsequences, the P groups of subsequences correspond to the P OFDM symbols, and each group of subsequences corresponds to one OFDM symbol. Based on this, the first sequence (namely, the X1 subsequences) may be divided into the P groups of subsequences. In other words, the first sequence may be considered as a combination of the P groups of subsequences. In this way, each group of subsequences may correspond to one OFDM symbol, and the P groups of subsequences correspond to the P OFDM symbols.

A quantity of subsequences included in each of the P groups of subsequences is greater than or equal to 0, and P is an integer greater than or equal to 1. A total quantity of subsequences included in all the P groups of subsequences is X1. For example, if an i^{th} group includes aᵢ subsequences, the total quantity X1 of subsequences included in all the P groups of subsequences is $X 1 = {\sum }_{i = 1}^{P} {a}_{i}$*.*

In an example, the quantity of subsequences included in each group of subsequences may depend on a quantity of first symbols in an OFDM symbol corresponding to the group of subsequences.

In another example, FIG. 13 is another diagram of a first sequence and a reference signal that are applicable to an embodiment of this application. As shown in FIG. 13, a length of the first sequence is N*X1, and the reference signal occupies P OFDM symbols. Therefore, the first sequence may be divided into P groups of subsequences, and each group of subsequences may correspond to one OFDM symbol. As shown in FIG. 13, a 1^{st} OFDM symbol includes two first symbols. Therefore, a 1^{st} group of subsequences corresponding to the 1^{st} OFDM symbol includes two subsequences. A P^{th} OFDM symbol includes three first symbols. Therefore, a P^{th} group of subsequences corresponding to the P^{th} OFDM symbol includes three subsequences.

Further, optionally, the P groups of subsequences include an i^{th} group of subsequences, the i^{th} group of subsequences corresponds to an i^{th} OFDM symbol in the P OFDM symbols, a frequency domain signal of the reference signal in the i^{th} OFDM symbol is determined based on positions of a first symbol and a second symbol that are included in the i^{th} OFDM symbol, and i is an integer greater than or equal to 1 and less than or equal to P. Based on this, the frequency domain signal in the i^{th} symbol, that is, the frequency domain signal in a bandwidth of the reference signal, may be determined based on the positions of a first symbol and a second symbol in the i^{th} OFDM symbol

Optionally, the method 1100 further includes: The transmit end device determines the first sequence. Based on this, the transmit end device may generate (or determine) the reference signal based on the first sequence, and then send the reference signal.

In an example, that the transmit end device determines the first sequence includes the following implementations.

In a first possible implementation, the transmit end device generates the first sequence.

Based on this implementation, the transmit end device may generate the first sequence based on an actual communication status, for example, based on an actual to-be-transmitted reference signal.

In an example, the transmit end device may determine a length of the first sequence based on a bandwidth (for example, a quantity of occupied frequency domain units) of a to-be-transmitted reference signal and a quantity (namely, X1) of first symbols included in the reference signal, and generate the first sequence. FIG. 13 is used as an example. It is assumed that the bandwidth of the reference signal is N REs, and a quantity of ON symbols in X OOK symbols of the reference signal is X1. Therefore, the transmit end device generates the first sequence whose length is W, where W=N*X1. A ZC sequence is used as an example. A maximum prime number less than or equal to W (or a minimum prime number greater than or equal to W) may be found, and is represented by W'. The ZC sequence whose length is W' is generated, and then a length is increased to W (or the length is truncated to W) through a cyclic shift.

In a second possible implementation, the transmit end device obtains (or reads) the first sequence.

Optionally, the first sequence is predefined, preconfigured, pre-agreed on, or pre-stored.

In an example, the first sequence is predefined, preconfigured, or pre-agreed on. When determining to transmit a reference signal, the transmit end device may directly obtain the first sequence. Alternatively, the transmit end device may select a proper first sequence based on an actual communication status, for example, based on an actual to-be-transmitted reference signal.

In another example, the first sequence may be pre-stored on a transmit end device side. When determining to transmit a reference signal, the transmit end device may directly read the first sequence. Alternatively, the transmit end device may select a proper first sequence based on an actual communication status, for example, based on an actual to-be-transmitted reference signal.

In another example, the first sequence may be pre-stored on another device side. When determining to transmit a reference signal, the transmit end device may obtain the first sequence from the another device side. Alternatively, the transmit end device may select a proper first sequence from the another device side based on an actual communication status, for example, based on an actual to-be-transmitted reference signal.

It may be understood that the foregoing implementations are an example for description, and this embodiment of this application is not limited thereto. Any manner in which the transmit end device obtains the first sequence is applicable to this embodiment of this application. For example, when the transmit end device needs to transmit a reference signal, the transmit end device may request a first sequence from another device, and the another device provides the first sequence to the transmit end device.

In this embodiment of this application, for ease of description, a sequence corresponding to the X1 first symbols is referred to as a first sequence. During actual communication, the first sequence may be directly obtained, for example, obtained in the foregoing two manners, or may be obtained based on another sequence (which is referred to as a second sequence for differentiation). For example, in the foregoing two implementations, the transmit end device may generate or obtain a second sequence, and then determine, based on the second sequence, a sequence (namely, the first sequence) corresponding to the X1 first symbols in the reference signal or a sequence (namely, the first sequence) used to generate the reference signal.

The second sequence represents a sequence corresponding to the reference signal. For example, the reference signal is generated based on subsequences of the second sequence. In this case, for ease of description, this part of sequence is referred to as the first sequence. For another example, the reference signal is generated based on a plurality of second sequences. In this case, for ease of description, the plurality of second sequences are collectively referred to as the first sequence. For another example, the reference signal is generated based on one second sequence. In this case, the second sequence may also be referred to as the first sequence. The foregoing solution is described below in detail.

During actual communication, a length of a reference signal is not fixed, for example, may be long in some cases, or may be short in some cases. Based on this, there may be the following two cases.

Case 1: A length of a second sequence corresponds to the length of the reference signal. In this case, the second sequence is the first sequence.

Case 2: A length of a second sequence does not correspond to the length of the reference signal. For example, the length of the second sequence corresponds to a part of the length of the reference signal. For another example, a part of the length of the second sequence corresponds to the length of the reference signal. In this case, the first sequence may be a sequence obtained by processing the second sequence.

Descriptions are provided below with reference to the two cases.

Case 1: The length of the second sequence corresponds to the length of the reference signal.

In this case, the first sequence is the second sequence. In other words, the transmit end device directly generates the first sequence, or the first sequence is predefined, preconfigured, or pre-agreed on.

For example, it is assumed that a bandwidth of the reference signal is N REs, a quantity of ON symbols in the X OOK symbols of the reference signal is X1, the length of the second sequence (namely, the first sequence) is W, and W=N*X1. As shown in FIG. 13, the length W of the second sequence (namely, the first sequence) is equal to N*X1. Therefore, the first sequence is the second sequence.

Case 2: The length of the second sequence does not correspond to the length of the reference signal.

In this case, the first sequence may be a sequence obtained by processing the second sequence. In this case, that the reference signal is generated based on the first sequence may alternatively be replaced with that the reference signal is generated based on the second sequence. For example, the transmit end device determines the second sequence, and then generates the reference signal based on the second sequence.

Descriptions are provided below with reference to two possible scenarios.

In a first possible scenario, the length of the second sequence corresponds to a part of the length of the reference signal. In this scenario, that the reference signal is generated based on the first sequence may alternatively be replaced with that the reference signal is generated based on the second sequence, or the reference signal is generated based on a plurality of second sequences. In addition, that the first sequence corresponds to the X1 OOK symbols may alternatively be replaced with that the second sequence corresponds to the X1 OOK symbols, or the plurality of second sequences correspond to the X1 OOK symbols.

If the reference signal has a long length and includes a large quantity of OOK symbols (for example, hundreds of OOK symbols or even thousands of OOK symbols), a length of a sequence (namely, the first sequence) used to generate the reference signal is N*X1. Therefore, the length of the sequence used to generate the reference signal is also very long. As a result, complexity of generating the reference signal based on the sequence with a long length is high. In addition, if the sequence used to generate the reference signal is pre-stored, a longer sequence length may also have a higher requirement on storage space. Therefore, the transmit end device may generate the second sequence whose length is shorter than that of the first sequence, or pre-store the second sequence, and then process the second sequence to obtain the first sequence with a long length.

In a possible implementation, the first sequence is obtained by concatenating L second sequences, L is not equal to X1, and L is an integer greater than 1.

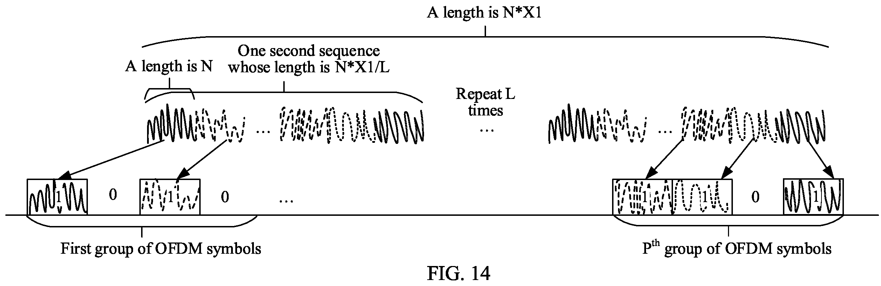

In an example, FIG. 14 is a diagram of a second sequence and a reference signal that are applicable to an embodiment of this application. As shown in FIG. 14, one second sequence corresponds to some OOK symbols of the reference signal. Specifically, a length of the second sequence is N*X1/L, and repeating the second sequence L times may yield a first sequence whose length is N*X1. In other words, the first sequence whose length is N*X1 is obtained by concatenating L second sequences.

It may be understood that, based on this embodiment of this application, for this scenario, the example shown in FIG. 14 is used as an example. The transmit end device may pre-store the second sequence whose length is N*X1/L, or generate the second sequence whose length is N*X1/L. When the first sequence whose length is N*X1 needs to be used to generate the reference signal, the L second sequences may be used to generate the reference signal, so that the reference signal may be generated by using the first sequence whose length is N*X1.

It may be further understood that the foregoing implementation is an example for description, and is not limited thereto. Any variation of the foregoing manner is applicable to this embodiment of this application. For example, the first sequence is obtained by concatenating L second sequences, and at least two of the L second sequences are different. For example, lengths of the at least two second sequences are different, or values of the at least two second sequences are different.

In a second possible scenario, a part of the length of the second sequence corresponds to the length of the reference signal. In this scenario, that the reference signal is generated based on the first sequence may alternatively be replaced with that the reference signal is generated based on the second sequence, or the reference signal is generated based on subsequences of the second sequence. In addition, that the first sequence corresponds to the X1 OOK symbols may alternatively be replaced with that the second sequence corresponds to the X1 OOK symbols, or the subsequences of the second sequence correspond to the X1 OOK symbols.

Considering that first sequences of a plurality of lengths may need to be generated and/or pre-stored for reference signals of different lengths, a requirement on storage space is high. Therefore, the transmit end may generate and/or pre-store a second sequence with a long length. When a reference signal needs to be sent, the second sequence with a long length may be processed (for example, truncated) based on a length of the reference signal, to obtain a first sequence with a short length.

In a possible implementation, the first sequence is part or all of the second sequence. When the first sequence is the part of the second sequence, the first sequence may be obtained by truncating the second sequence. When the first sequence is the second sequence, this is similar to Case 1. Details are not described herein again. The following mainly describes a case in which the first sequence is the part of the second sequence.

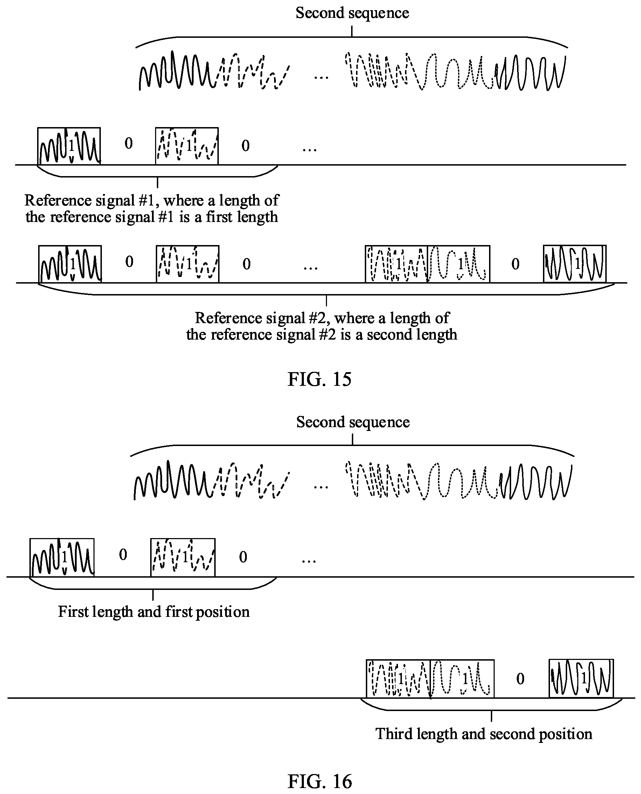

In an example, FIG. 15 and FIG. 16 are other diagrams of a second sequence and a reference signal that are applicable to an embodiment of this application. As shown in FIG. 15 or

FIG. 16, partial length of the second sequence corresponds to OOK symbols included in the reference signal. For example, as shown in FIG. 15, when a reference signal #1 includes four OOK symbols (for example, a length of the reference signal #1 is a first length), the four OOK symbols include two first symbols. Therefore, a first sequence used to generate the reference signal #1 may be two subsequences of the second sequence. For another example, as shown in FIG. 15, when a reference signal #2 includes X OOK symbols (for example, a length of the reference signal #21 is a second length), a first sequence used to generate the reference signal #2 may be the second sequence.

In an example, a start position of the first sequence is a start position of the second sequence. Based on this, regardless of a length of the reference signal, a sequence (namely, the first sequence) used to generate the reference signal is obtained through truncation from the start position of the second sequence.

As shown in FIG. 15, both start positions of the first sequence used to generate the reference signal #1 and the first sequence used to generate the reference signal #2 are the start position of the second sequence. Specifically, the first sequence used to generate the reference signal #1 may be obtained by truncating a sequence whose length is the first length from the start position of the second sequence. In other words, the sequence of the first length may be truncated from the start position of the second sequence to obtain the first sequence used to generate the reference signal #1. The first sequence used to generate the reference signal #2 may be obtained by truncating a sequence whose length is the second length from the start position of the second sequence. In other words, the sequence of the second length may be truncated from the start position of the second sequence to obtain the first sequence used to generate the reference signal #2.

In another example, a start position of the first sequence is determined based on a time domain resource occupied by the reference signal. Based on this, first sequences used by the reference signal vary with time domain resources occupied by the reference signal. For example, the second sequence may correspond to specific duration (for example, duration of a system frame (for example, 10 ms)), and each subsequence of the second sequence corresponds to a different position in the duration. For example, each subsequence of the second sequence corresponds to a different position (for example, a different subframe position, a different slot (slot) position, or a different OFDM symbol position) of one system frame. In this way, after sending time of the reference signal is determined, the first sequence used to generate the reference signal may be determined.

As shown in FIG. 16, sending time of a reference signal #1 is a first position, and sending time of a reference signal #3 is a second position. The first position is different from the second position, and a start position of a first sequence used to generate the reference signal #1 is also different from a start position of a first sequence used to generate the reference signal #3.

For example, when the sending time of the reference signal is the first position (for example, a 1^{st} slot or a 1^{st} OFDM symbol), the start position of the first sequence is the start position of the second sequence. As shown in FIG. 16, based on this, the first sequence used to generate the reference signal #1 may be obtained by truncating a sequence whose length is a first length from the start position of the second sequence. In other words, the sequence of the first length may be truncated from the start position of the second sequence to obtain the first sequence used to generate the reference signal #1.

For another example, when the sending time of the reference signal is the second position (for example, a last slot or a last OFDM symbol), the start position of the first sequence is an end position of the second sequence. As shown in FIG. 16, based on this, the first sequence used to generate the reference signal #3 may be obtained by truncating a sequence whose length is a third length from the end position of the second sequence. In other words, the sequence of the third length may be truncated from the end position of the second sequence to obtain the first sequence used to generate the reference signal #3.

It may be understood that, based on this embodiment of this application, for this scenario, the example shown in FIG. 15 or FIG. 16 is used as an example. The transmit end device may pre-store a second sequence with a long length, or generate a second sequence with a long length. When the first sequence needs to be used to generate the reference signal, the first sequence may be obtained through truncation from the second sequence as needed.

The foregoing separately describes the solutions in embodiments of this application. The following describes, from a transmit end device side and a receive end device side, possible specific procedures applicable to embodiments of this application with reference to Case 1 and Case 2.
1. Case 1 is used as an example to describe possible procedures of the transmit end device and the receive end device.

### 1. Transmit end device

The example shown in FIG. 13 is used as an example. In an example, the transmit end device may perform the following operations.
(1) Determine a first sequence whose length is W=N*X1, which is, for example, denoted as {x₀, x₁, ..., x_{N*X1}}.

In a possible implementation, the transmit end device generates the first sequence.

In another possible implementation, the transmit end device obtains (or reads) the first sequence.

(2) Divide the first sequence (namely, a time domain sequence, for example, a complex number sequence) whose length is W into X1 subsequences, where a length of each subsequence is N, and the subsequences are respectively {x₀, ..., x_{N-1}}, {x_{N}, ..., x_{2N-1}}, ..., and {x_{N*(X1-1)}, ..., x_{N*X1}}.

(3) Assuming that a reference signal occupies P OFDM symbols, divide the X1 subsequences into P groups, where each group generates a time domain sequence based on a pattern corresponding to an OOK symbol in an OFDM symbol.

Specifically, the X1 subsequences are divided into the P groups of subsequences based on a pattern corresponding to OOK symbols of the reference signal, and each group of subsequences generates a time domain sequence based on a pattern corresponding to an OOK symbol in a corresponding OFDM symbol. Specifically, if the OOK symbol is a first symbol, the time domain sequence is a corresponding subsequence. If the OOK symbol is a second symbol, 0 is filled, so that time domain sequences of the P OFDM symbols are obtained. As shown in FIG. 13, in a first group of OFDM symbols, it can be learned, based on a pattern corresponding to OOK symbols, that the first group of OFDM symbols includes two first symbols. Therefore, a first group of subsequences corresponding to the first group of OFDM symbols includes two subsequences. In a last group (a P^{th} group) of OFDM symbols, it can be learned, based on a pattern corresponding to OOK symbols, that the P^{th} group of OFDM symbols includes three first symbols. Therefore, a P^{th} group of subsequences corresponding to the P^{th} group of OFDM symbols includes three subsequences.

Further, optionally, a CP is generated based on the time domain sequence, and one CP is generated for each group of subsequences (that is, corresponding to each OFDM symbol).

(4) Generate a corresponding frequency domain sequence based on a time domain sequence of each OFDM symbol, and map the frequency domain sequence to a corresponding frequency domain position, to obtain a frequency domain signal.

For example, a DFT operation may be performed on a time domain sequence, to obtain a frequency domain sequence. For another example, a corresponding frequency domain sequence may be obtained by using some algorithms (for example, an LS algorithm).

After obtaining the frequency domain sequence, the transmit end device may map the frequency domain sequence to a frequency domain position of the reference signal (for example, an LP-SS), for example, a subcarrier corresponding to the reference signal.

(5) Perform IFFT (or inverse discrete fourier transform (inverse discrete fourier transform, IDFT)) on the frequency domain signal to obtain a to-be-sent signal.

If there is a signal (for example, a data signal) other than the reference signal (for example, the LP-SS) in a same OFDM symbol, in an example, IFFT (or IDFT) may be performed on the frequency domain signal obtained in step (4) and another frequency domain signal together, or IFFT (or IDFT) may be performed on the frequency domain signal and the another frequency domain signal separately. This is not limited herein.

### 2. Receive end device

For example, the reference signal is used for time synchronization. In an example, the receive end device may perform the following operations.
(1) Determine a first sequence, and obtain a local sequence based on the first sequence.

That the receive end device determines the local sequence based on the first sequence may include: For example, the receive end device processes (for example, performs spectrum spreading processing or oversampling processing on) the first sequence to obtain the local sequence. In an example, a length of the local sequence is related to a sampling rate used by the receive end device.

For a manner in which the receive end device determines the first sequence, refer to the manner in which the transmit end device determines the first sequence. This is not limited herein.

(2) Receive a signal, and obtain, from the received signal, a to-be-processed signal based on a pattern corresponding to X OOK symbols.

Specifically, the receive end device may select target sampling points from the received signal based on the pattern corresponding to the OOK symbols of the reference signal, and perform concatenation processing to obtain a concatenated sequence.

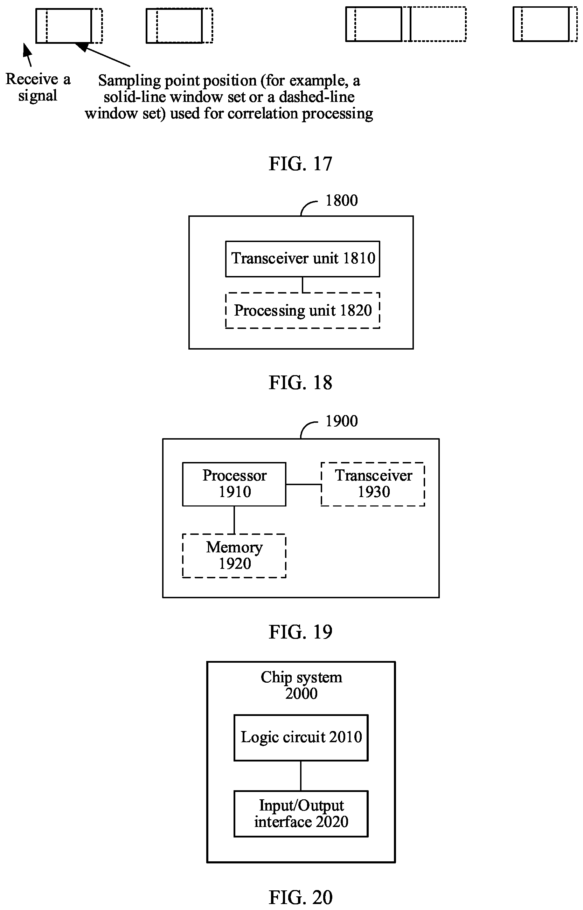

In an example, FIG. 17 is a diagram of processing a reference signal by a receive end device applicable to an embodiment of this application. As shown in FIG. 17, it is assumed that a sampling point a is a start point of a reference signal, and sampling points corresponding to first symbols are selected as target sampling points based on a pattern corresponding to OOK symbols. As shown in FIG. 17, shadow parts are all received signals. If the sampling point a is a start point of a leftmost solid-line window, target sampling points are all sampling points included in all solid-line window sets. If the sampling point a is a start point of a leftmost dashed-line window, target sampling points are all sampling points included in all dashed-line window sets. In the solid-line window set or the dashed-line window set, each window may correspond to a length of one OOK symbol, and a relative position of each window is determined based on a relative position of the first symbol in the reference signal.

Optionally, the target sampling point does not include a CP of each OFDM symbol.

(3) Perform correlation processing on the to-be-processed signal and the local sequence, to obtain time synchronization.

Specifically, the receive end device performs correlation between the concatenated sequence and the local sequence, to obtain a correlation value. Then, a reference point is changed, and sliding correlation is performed to obtain a plurality of correlation values. A correlation peak is found from the plurality of correlation values, or a correlation value greater than a threshold is found from the plurality of correlation values, so that a start position of the reference signal in time domain is determined, to obtain time synchronization.

### 2. Case 2 is used as an example to describe possible procedures of the transmit end device and the receive end device.

### 1. Transmit end device

The example shown in FIG. 14 is used as an example. In an example, the transmit end device may perform the following operations.
(1) Determine a second sequence whose length is N*X1/L.

In a possible implementation, the transmit end device generates the second sequence.

In another possible implementation, the transmit end device obtains (or reads) the second sequence.

For details, refer to the foregoing manner in which the transmit end device determines the first sequence. Details are not described herein again.

(2) Divide L second sequences (namely, time domain sequences, for example, complex number sequences) into X1 subsequences, where a length of each subsequence is N.

It is assumed that a bandwidth of a reference signal is N REs, and a quantity of ON symbols in X OOK symbols of the reference signal is X1. Therefore, the transmit end device generates the reference signal by using a sequence with a length of N*X1. Because a length of one second sequence is N*X1/L, the transmit end device may generate the reference signal by using L second sequences.

(3) Assuming that the reference signal occupies P OFDM symbols, divide the X1 subsequences into P groups, where each group generates a time domain sequence based on a pattern corresponding to an OOK symbol in an OFDM symbol.

(4) Generate a corresponding frequency domain sequence based on a time domain sequence of each OFDM symbol, and map the frequency domain sequence to a corresponding frequency domain position, to obtain a frequency domain signal.

(5) Perform IFFT on the frequency domain signal to obtain a to-be-sent signal.

For step (3) to step (5), refer to the foregoing related descriptions. Details are not described herein again.

### 2. Receive end device

For example, the reference signal is used for time synchronization. In an example, the receive end device may perform the following operations.
(1) Determine a second sequence, and obtain a local sequence based on the second sequence.

Specifically, the receive end device may obtain the local sequence based on L second sequences.

That the receive end device determines the local sequence based on the second sequence may include: For example, the receive end device processes (for example, performs spectrum spreading processing or oversampling processing on) the second sequence to obtain the local sequence.

For a manner in which the receive end device determines the second sequence, refer to the manner in which the transmit end device determines the second sequence. This is not limited herein.

(2) Receive a signal, and obtain, from the received signal, a to-be-processed signal based on a pattern corresponding to X OOK symbols.

(3) Perform correlation processing on the to-be-processed signal and the local sequence, to obtain time synchronization.

For step (2) and step (3), refer to the foregoing related descriptions. Details are not described herein again.

It may be understood that, in embodiments of this application, "a sequence is divided into a plurality of subsequences" is mentioned for a plurality of times. It may be understood that this is merely a description for ease of understanding, and does not limit a case in which segmentation processing is necessarily performed on a sequence to obtain a plurality of subsequences. For example, FIG. 12 is used as an example. That the first sequence is mapped to different OOK symbols, and different OOK symbols correspond to different subsequences of the first sequence may alternatively be understood as that subsequences on different OOK symbols may be considered as being obtained by dividing (or segmenting) the first sequence.

It may be further understood that, in embodiments of this application, "receiving" may alternatively be replaced with "detecting", "reading", or "monitoring". For example, "receiving a reference signal" may alternatively be replaced with "detecting a reference signal", "reading a reference signal", or "monitoring a reference signal".

It may be further understood that in some of the foregoing embodiments, the main link and the wake up link are mainly used as examples for descriptions. This application is not limited thereto. For example, "the wake up circuit" may alternatively be replaced with "a first module", may be replaced with "a wake up link", may be replaced with "in a first state", or may be replaced with "in a first mode". For example, "the terminal device receives a signal by using the wake up circuit" may alternatively be replaced with "the terminal device receives a signal using the first module or the terminal device receives a signal on the wake up link". The "main circuit" may alternatively be replaced with "a second module", may be replaced with "a main link", may be replaced with "in a second state", or may be replaced with "in a second mode". For example, "the terminal device receives a signal by using the main circuit" may alternatively be replaced with "the terminal device receives a signal using the second module or the terminal device receives a signal on the main link".

It may be further understood that, in some of the foregoing embodiments, "transmission" is mentioned. Unless otherwise specified, transmission includes receiving and/or sending. For example, performing transmission of a signal may include receiving a signal and/or sending a signal.

It may be further understood that, in embodiments of this application, for ease of description, a device that sends a reference signal is referred to as a transmit end device, and a device that receives the reference signal is referred to as a receive end device. Names and specific forms of the transmit end device and the receive end device do not limit the protection scope of embodiments of this application. For example, the transmit end device may be a terminal device or a network device, and the receive end device may be a terminal device or a network device.

It may be further understood that, in some of the foregoing embodiments, sending information is mentioned for a plurality of times. For example, A sends information to B. That A sends information to B may include that A directly sends the information to B, or may include that A sends the information to B via another device or network element. This is not limited.

It may be further understood that, in some of the foregoing embodiments, pre-agreed on and predefined are mentioned for a plurality of times, and a person skilled in the art should understand meanings of pre-agreed on and predefined. Predefined indicates predefined in a protocol. Pre-agreed on indicates that devices pre-agree or pre-negotiate with each other. For example, if a sequence (for example, the first sequence or the second sequence) is pre-agreed on, it indicates that a form of the sequence and/or a generation manner of the sequence are/is pre-agreed on between devices (for example, between the receive end device and the transmit end device).

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that in the foregoing method embodiments, the method and the operation implemented by the terminal device may be implemented by a component (for example, a chip or a circuit) of the terminal device. In addition, the method and the operation implemented by the network device may alternatively be implemented by a component (for example, a chip or a circuit) of the network device. This is not limited.

The methods provided in embodiments of this application are described in detail above with reference to FIG. 11 to FIG. 17. The following describes in detail apparatuses provided in embodiments of this application with reference to FIG. 18 to FIG. 20. It should be understood that descriptions of apparatus embodiments correspond to the descriptions of the method embodiments. Therefore, for content that is not described in detail, refer to the foregoing method embodiments. For brevity, details are not described herein again.

In an example, FIG. 18 is a diagram of a communication apparatus 1800 according to an embodiment of this application. The apparatus includes a transceiver unit 1810. The transceiver unit 1810 may be configured to implement a corresponding communication function. The transceiver unit 1810 may also be referred to as a communication interface or a communication unit. Optionally, the apparatus 1800 further includes a processing unit 1820. The processing unit 1820 may be configured to perform processing, for example, generate a first sequence.

Optionally, the apparatus 1800 may further include a storage unit. The storage unit may be configured to store instructions and/or data, and the processing unit 1820 may read the instructions and/or the data in the storage unit, to cause the apparatus to implement the foregoing method embodiments.

In a first possible design, the apparatus 1800 may be the transmit end device in the foregoing embodiments, and the apparatus 1800 may implement steps or procedures performed by the transmit end device in the foregoing method embodiments. The transceiver unit 1810 may be configured to perform a receiving and sending-related operation (for example, an operation of sending and/or receiving data or a message) of the transmit end device in the foregoing method embodiments. The processing unit 1820 may be configured to perform a processing-related operation or an operation other than receiving and sending (for example, an operation other than sending and/or receiving data or a message) of the transmit end device in the foregoing method embodiments.

In a possible implementation, the transceiver unit 1810 is configured to send a reference signal, where the reference signal is generated based on a first sequence, the reference signal includes X on-off keying OOK symbols, the X OOK symbols include X1 first symbols and X2 second symbols, the first symbol indicates a first bit value, the second symbol indicates a second bit value, the first sequence corresponds to the X1 first symbols, X is an integer greater than 1, X1 and X2 are integers greater than or equal to 0, and X1+X2=X.

Optionally, the processing unit 1820 is configured to determine the reference signal.

Optionally, the processing unit 1820 is configured to determine the first sequence.

Optionally, the processing unit 1820 is configured to generate the reference signal based on the first sequence.

In a second possible design, the apparatus 1800 may be the receive end device in the foregoing embodiments, and the apparatus 1800 may implement steps or procedures performed by the receive end device in the foregoing method embodiments. The transceiver unit 1810 may be configured to perform a receiving and sending-related operation (for example, an operation of sending and/or receiving data or a message) of the receive end device in the foregoing method embodiments. The processing unit 1820 may be configured to perform a processing-related operation or an operation other than receiving and sending (for example, an operation other than sending and/or receiving data or a message) of the receive end device in the foregoing method embodiments.

In a possible implementation, the transceiver unit 1810 is configured to receive a reference signal, where the reference signal is generated based on a first sequence, the reference signal includes X on-off keying OOK symbols, the X OOK symbols include X1 first symbols and X2 second symbols, the first symbol indicates a first bit value, the second symbol indicates a second bit value, the first sequence corresponds to the X1 first symbols, X is an integer greater than 1, X1 and X2 are integers greater than or equal to 0, and X1+X2=X.

Optionally, the processing unit 1820 is configured to perform correlation processing on the reference signal based on the first sequence.

Optionally, that the processing unit 1820 is configured to perform correlation processing on the reference signal based on the first sequence includes: The processing unit 1820 is configured to: obtain a to-be-processed signal based on a pattern corresponding to the X OOK symbols; and perform correlation processing on the to-be-processed signal based on the first sequence.

It should be understood that a specific process in which the units perform the foregoing corresponding steps is described in detail in the foregoing method embodiments. For brevity, details are not described herein again.

It should be understood that the apparatus 1800 herein is embodied in a form of a functional unit. The term "unit" herein may refer to an application specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1800 may be specifically the communication apparatus in the foregoing embodiments, and may be configured to perform procedures and/or steps corresponding to the communication apparatus in the foregoing method embodiments. To avoid repetition, details are not described herein again.

The apparatus 1800 in each of the foregoing solutions has a function of implementing corresponding steps performed by the communication apparatus (for example, the transmit end device or the receive end device) in the foregoing methods. The function may be implemented by hardware, or may be implemented by hardware executing corresponding software. The hardware or the software includes one or more modules corresponding to the foregoing function. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit 1810 may alternatively be a transceiver circuit (for example, may include a receiving circuit and a sending circuit), and the processing unit may be a processing circuit.

It should be noted that the apparatus in FIG. 18 may be the communication device (for example, the terminal device or the network device) in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

In an example, FIG. 19 is a diagram of another communication apparatus 1900 according to an embodiment of this application. The apparatus 1900 includes a processor 1910. The processor 1910 is coupled to a memory 1920. The memory 1920 is configured to store a computer program or instructions and/or data. The processor 1910 is configured to: execute the computer program or the instructions stored in the memory 1920, or read the data stored in the memory 1920, to perform the methods in the foregoing method embodiments.

Optionally, there is one or more processors 1910.

Optionally, there is one or more memories 1920.

Optionally, the memory 1920 and the processor 1910 are integrated together, or separately disposed.

Optionally, as shown in FIG. 19, the apparatus 1900 further includes a transceiver 1930. The transceiver 1930 is configured to: receive and/or send a signal. For example, the processor 1910 is configured to control the transceiver 1930 to receive the signal and/or send the signal.

In an example, the processor 1910 may have a function of the processing unit 1820 shown in FIG. 18, the memory 1920 may have a function of the storage unit, and the transceiver 1930 may have a function of the transceiver unit 1810 shown in FIG. 18.

In a solution, the apparatus 1900 is configured to implement operations performed by the communication apparatus (for example, the transmit end device or the receive end device) in the foregoing method embodiments.

For example, the processor 1910 is configured to execute the computer program or the instructions stored in the memory 1920, to implement related operations of the communication apparatus in the foregoing method embodiments.

It should be understood that, the processor mentioned in embodiments of this application may be a central processing unit (central processing unit, CPU), and may further be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should further be understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these memories and any other appropriate type of memory.

In an example, FIG. 20 is a diagram of a chip system 2000 according to an embodiment of this application. The chip system 2000 (or may be referred to as a processing system) includes a logic circuit 2010 and an input/output interface (input/output interface) 2020.

The logic circuit 2010 may be a processing circuit in the chip system 2000. The logic circuit 2010 may be coupled to and connected to a storage unit, and invokes instructions in the storage unit, to enable the chip system 2000 to implement the methods and functions in embodiments of this application. The input/output interface 2020 may be an input/output circuit in the chip system 2000, and outputs information processed by the chip system 2000, or inputs to-be-processed data or signaling information into the chip system 2000 for processing.

In a solution, the chip system 2000 is configured to implement operations performed by the communication apparatus (for example, the transmit end device or the receive end device) in the foregoing method embodiments.

For example, the logic circuit 2010 is configured to implement a processing-related operation performed by the communication apparatus (for example, the transmit end device or the receive end device) in the foregoing method embodiments. The input/output interface 2020 is configured to implement a sending and/or receiving-related operation performed by the communication apparatus (for example, the transmit end device or the receive end device) in the foregoing method embodiments.

An embodiment of this application further provides a computer-readable storage medium. The computer-readable storage medium stores computer instructions used to implement the method performed by the communication apparatus (for example, the transmit end device or the receive end device) in the foregoing method embodiments.

For example, when the computer program is executed by a computer, the computer is enabled to implement the method performed by the communication apparatus (for example, the transmit end device or the receive end device) in the foregoing method embodiments.

An embodiment of this application further provides a computer program product, including instructions. When the instructions are executed by a computer, the method performed by the communication apparatus (for example, the transmit end device or the receive end device) in the foregoing method embodiments is implemented.

An embodiment of this application further provides a communication system. The communication system includes the transmit end device and the receive end device in the foregoing embodiments. For example, the system includes the transmit end device and the receive end device in the embodiment in FIG. 11.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending a reference signal, wherein the reference signal is generated based on a first sequence, the reference signal comprises X on-off keying OOK symbols, the X OOK symbols comprise X1 first symbols and X2 second symbols, the first symbol indicates a first bit value, the second symbol indicates a second bit value, the first sequence corresponds to the X1 first symbols, X is an integer greater than 1, X1 and X2 are integers greater than or equal to 0, and X1+X2=X.

2. A communication method, comprising:
receiving a reference signal, wherein the reference signal is generated based on a first sequence, the reference signal comprises X on-off keying OOK symbols, the X OOK symbols comprise X1 first symbols and X2 second symbols, the first symbol indicates a first bit value, the second symbol indicates a second bit value, the first sequence corresponds to the X1 first symbols, X is an integer greater than 1, X1 and X2 are integers greater than or equal to 0, and X1+X2=X.

3. The method according to claim 2, wherein the method further comprises:
performing correlation processing on the reference signal based on the first sequence.

4. The method according to claim 3, wherein the performing correlation processing on the reference signal based on the first sequence comprises:
obtaining a to-be-processed signal based on a pattern corresponding to the X OOK symbols; and
performing correlation processing on the to-be-processed signal based on the first sequence.

5. The method according to any one of claims 1 to 4, wherein the first sequence comprises X1 subsequences, and each of the X1 subsequences corresponds to one of first symbol.

6. The method according to any one of claims 1 to 5, wherein the reference signal is generated based on the first sequence and the pattern corresponding to the X OOK symbols.

7. The method according to claim 6, wherein the pattern corresponding to the X OOK symbols represents positions and/or an order of the X1 first symbols and the X2 second symbols.

8. The method according to any one of claims 1 to 7, wherein a length of the first sequence is N*X1, and N indicates a quantity of frequency domain units occupied by the reference signal.

9. The method according to any one of claims 1 to 8, wherein the first sequence is obtained by concatenating L second sequences, L is not equal to X1, and L is an integer greater than 1.

10. The method according to any one of claims 1 to 8, wherein the first sequence is part or all of a second sequence.

11. The method according to claim 10, wherein
a start position of the first sequence is a start position of the second sequence; or
a start position of the first sequence is determined based on a time domain resource occupied by the reference signal.

12. The method according to any one of claims 1 to 11, wherein the reference signal occupies P orthogonal frequency division multiplexing OFDM symbols, the first sequence comprises P groups of subsequences, the P groups of subsequences correspond to the P OFDM symbols, each group of subsequences corresponds to one OFDM symbol, a quantity of subsequences comprised in each of the P groups of subsequences is greater than or equal to 0, and P is an integer greater than or equal to 1.

13. The method according to claim 12, wherein the P groups of subsequences comprise an i^{th} group of subsequences, the i^{th} group of subsequences corresponds to an i^{th} OFDM symbol in the P OFDM symbols, a frequency domain signal of the reference signal in the i^{th} OFDM symbol is determined based on positions of a first symbol and a second symbol that are comprised in the i^{th} OFDM symbol, and i is an integer greater than or equal to 1 and less than or equal to P.

14. The method according to any one of claims 1 to 13, wherein the reference signal is periodically sent.

15. The method according to any one of claims 1 to 14, wherein the reference signal is a low-power synchronization signal LP-SS.

16. The method according to any one of claims 1 to 15, wherein the first sequence is any one of the following: a ZC sequence, a GOLD sequence, an m sequence, and a pseudo-random sequence.

17. The method according to claim 8, wherein the frequency domain unit is a resource element or a subcarrier.

18. The method according to any one of claims 1 to 17, wherein a signal power of the first symbol is not 0, and a signal power of the second symbol is 0; or
a signal power of the first symbol is greater than or equal to a first threshold, a signal power of the second symbol is less than or equal to a second threshold, and the first threshold is greater than or equal to the second threshold.

19. A communication method, comprising:
sending a reference signal, wherein the reference signal is generated based on a second sequence, the reference signal comprises X on-off keying OOK symbols, the X OOK symbols comprise X1 first symbols and X2 second symbols, the first symbol indicates a first bit value, the second symbol indicates a second bit value, subsequences of the second sequence correspond to the X1 first symbols, X is an integer greater than 1, X1 and X2 are integers greater than or equal to 0, and X1+X2=X.

20. The method according to claim 19, wherein that the reference signal is generated based on the second sequence comprises:
the reference signal is generated based on the subsequences of the second sequence.

21. The method according to claim 19 or 20, wherein a start position of a sequence used to generate the reference signal is a start position of the second sequence; or a start position of a sequence used to generate the reference signal is determined based on a time domain resource occupied by the reference signal.

22. A communication method, comprising:
receiving a reference signal, wherein the reference signal is generated based on a second sequence, the reference signal comprises X on-off keying OOK symbols, the X OOK symbols comprise X1 first symbols and X2 second symbols, the first symbol indicates a first bit value, the second symbol indicates a second bit value, subsequences of the second sequence correspond to the X1 first symbols, X is an integer greater than 1, X1 and X2 are integers greater than or equal to 0, and X1+X2=X.

23. The method according to claim 22, wherein that the reference signal is generated based on the second sequence comprises:
the reference signal is generated based on the subsequences of the second sequence.

24. The method according to claim 22 or 23, wherein a start position of a sequence used to generate the reference signal is a start position of the second sequence; or a start position of a sequence used to generate the reference signal is determined based on a time domain resource occupied by the reference signal.

25. A communication method, comprising:
sending a reference signal, wherein the reference signal is generated based on a second sequence, the reference signal comprises X on-off keying OOK symbols, the X OOK symbols comprise X1 first symbols and X2 second symbols, the first symbol indicates a first bit value, the second symbol indicates a second bit value, the second sequence corresponds to a partial X1 first symbols, X is an integer greater than 1, X1 and X2 are integers greater than or equal to 0, and X1+X2=X.

26. The method according to claim 25, wherein that the reference signal is generated based on the second sequence comprises: the reference signal is generated based on at least two second sequences.

27. The method according to claim 25 or 26, wherein a sequence used to generate the reference signal is obtained by concatenating L second sequences, L is not equal to X1, and L is an integer greater than 1.

28. A communication method, comprising:
receiving a reference signal, wherein the reference signal is generated based on a second sequence, the reference signal comprises X on-off keying OOK symbols, the X OOK symbols comprise X1 first symbols and X2 second symbols, the first symbol indicates a first bit value, the second symbol indicates a second bit value, the second sequence corresponds to a partial X1 first symbols, X is an integer greater than 1, X1 and X2 are integers greater than or equal to 0, and X1+X2=X.

29. The method according to claim 28, wherein that the reference signal is generated based on the second sequence comprises: the reference signal is generated based on at least two second sequences.

30. The method according to claim 28 or 29, wherein a sequence used to generate the reference signal is obtained by concatenating L second sequences, L is not equal to X1, and L is an integer greater than 1.

31. A communication apparatus, comprising a module or a unit configured to perform the method according to any one of claims 1 to 30.

32. A communication apparatus, comprising a processor, wherein the processor is configured to enable the communication apparatus to perform the method according to any one of claims 1 to 30.

33. The apparatus according to claim 32, wherein the apparatus further comprises the memory and/or a communication interface, wherein
the communication interface is coupled to the processor, and the communication interface is configured to input and/or output information; and
the memory is configured to store a computer program or instructions used to perform the method according to any one of claims 1 to 30.

34. A computer-readable storage medium, wherein the computer-readable storage medium stores a computer program or instructions, and when the computer program or the instructions are run on a communication apparatus, the communication apparatus is enabled to perform the method according to any one of claims 1 to 30.

35. A computer program product, wherein the computer program product comprises a computer program or instructions used to perform the method according to any one of claims 1 to 30.
